(19) Europäisches Patentamt

European Patent Office

Office européen des brevets

(11) **EP 4 633 259 A1**

(12) **EUROPEAN PATENT APPLICATION**
published in accordance with Art. 153(4) EPC

(43) Date of publication:
**15.10.2025 Bulletin 2025/42**

(21) Application number: **23947086.7**

(22) Date of filing: **01.08.2023**

(51) International Patent Classification (IPC):
*H04W 64/00* (2009.01)

(52) Cooperative Patent Classification (CPC):
**H04W 64/00**

(86) International application number:
**PCT/CN2023/110556**

(87) International publication number:
**WO 2025/025138 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHANG, Shichang**
**Dongguan, Guangdong 523860 (CN)**

(74) Representative: **Mewburn Ellis LLP**
**Aurora Building**
**Counterslip**
**Bristol BS1 6BX (GB)**

(54) **METHOD FOR SIDELINK COMMUNICATION, AND TERMINAL DEVICE**

(57) Provided is a method for sidelink communication and a terminal device. The method includes: a first terminal device transmits or receives a sidelink reference signal in a first slot, where the first sidelink reference signal is used for sidelink positioning. Compared with a traditional scheme where the transmission method for the first sidelink reference signal is not defined, the technical solution provided herein helps to achieve the sidelink positioning based on the first sidelink reference signal.

First terminal device | Other terminal devices

S1810, Receive first SL reference signal in a first slot

S1810, Transmit first SL reference signal in a first slot

FIG. 18

**Description**

TECHNICAL FIELD

This disclosure relates to the field of communication technology, and particularly relates to a method for sidelink communication and a terminal device.

BACKGROUND

Some communication systems (such as the new radio (NR) system) aim to introduce positioning based on sidelink to enhance positioning technologies. That is to say, it is possible to transmit reference signals for sidelink positioning (also known as sidelink positioning reference signal (SL PRS)) over the sidelink. However, it is not yet clear how terminal devices will receive and/or transmit SL PRS.

SUMMARY

Disclosed herein are a method for sidelink communication and a terminal device. The following is an introduction to the various aspects involved in the disclosure.

In a first aspect, a method for sidelink communication is provided. The method includes the following. A first terminal device transmits or receives a first sidelink reference signal in a first slot, where the first sidelink reference signal is used for sidelink positioning.

In a second aspect, a terminal device is provided. The terminal device includes a communication unit. The communication unit is configured to transmit or receive a first sidelink reference signal in a first slot, where the first sidelink reference signal is used for sidelink positioning.

In a third aspect, a terminal device is provided. The terminal device includes a transceiver, a memory, and a processor. The memory is configured to store programs, the processor is configured to invoke the programs stored in the memory and control the transceiver to receive or transmit signals, to cause the terminal device to perform the method in the first aspect.

In a fourth aspect, a device is provided. The device includes a processor, which is configured to invoke programs from a memory to cause the device to perform the method in the first aspect.

In a fifth aspect, a chip is provided. The chip includes a processor, which is configured to invoke programs from a memory to cause a device equipped with the chip to perform the method in the first aspect.

In a sixth aspect, a computer readable storage medium is provided. The computer readable storage medium stores programs, which cause a computer to perform the method in the first aspect.

In a seventh aspect, a computer program product is provided. The computer program product includes programs, which cause a computer to perform the method in the first aspect.

In an eighth aspect, a computer program is provided, which cause a computer to perform the method in the first aspect.

In this disclosure, the first terminal device can transmit or receive a first sidelink reference signal for sidelink positioning in a first slot, which is help to achieve the first sidelink reference signal based sidelink positioning.

BRIEF DESCRIPTION OF THE DRAWINGS

FIG. 1 is a diagram of a system architecture for a wireless communication system to which the embodiments of the disclosure can be applied.
FIG. 2 is a scenario diagram of sidelink communication in network coverage.
FIG. 3 is a scenario diagram of sidelink communication in partial network coverage.
FIG. 4 is a scenario diagram of sidelink communication out of network coverage.
FIG. 5 is a scenario diagram of sidelink communication based on a central control node.
FIG. 6 is a diagram of a sidelink communication method based on broadcasting.
FIG. 7 is a diagram of a sidelink communication method based on unicast.
FIG. 8 is a diagram of a sidelink communication method based on multicast.
FIG. 9 is a diagram of a slot structure for a sidelink communication system.
FIG. 10 is an exemplary diagram illustrating the structure of 2nd-stage SCI in a slot.
FIG. 11 is an exemplary diagram illustrating the time-domain positions of PSCCH DMRS symbols within a slot.
FIG. 12 is an exemplary diagram illustrating a single-symbol DMRS frequency-domain type 1.

FIG. 13 is an exemplary diagram illustrating resource mapping of PT-RS when PSCCH and 2nd-stage SCI exist in a slot.

FIG. 14 is an exemplary diagram illustrating resources for transmitting DL PRS.

FIG. 15 is a schematic diagram illustrating the structure of interlaced resource blocks (IRBs).

FIG. 16 is an exemplary diagram illustrating the frame structure of an SL-U system.

FIG. 17 is an exemplary diagram illustrating an RB set.

FIG. 18 is a schematic flowchart of a method for sidelink communication provided in an embodiment of the disclosure.

FIG. 19 is a schematic diagram illustrating PRS transmission in an embodiment of the disclosure.

FIG. 20 is another schematic diagram illustrating PRS transmission in an embodiment of the disclosure.

FIG. 21 is a structural schematic diagram of a terminal device provided in an embodiment of the disclosure.

FIG. 22 is a structural schematic diagram of a communication device provided in an embodiment of the disclosure.

## DETAILED DESCRIPTION

Technical solutions provided herein will be descried in conjunction with the drawings.

**Communication System Architecture**

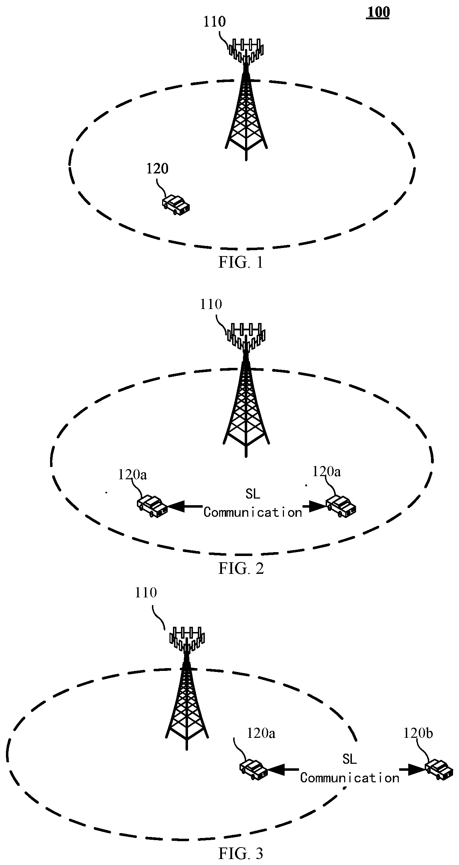

FIG. 1 is an exemplary system architecture diagram of a wireless communication system 100 to which the embodiments of this disclosure can be applied. The wireless communication system 100 may include a network device 110 and a terminal device 120. The network device 110 may be a device that communicates with the terminal device 120. The network device 110 may provide communication coverage for a specific geographic area and may communicate with the terminal device 120 located within that coverage area.

FIG. 1 exemplarily illustrates one network device and one terminal device. Optionally, the wireless communication system 100 may include one or more network devices 110 and/or one or more terminal devices 120. For one network device 110, the one or more terminal devices 120 may all be located in the network coverage area of the network device 110, all be located out of the network coverage area of the network device 110, or some may be in the coverage area while others are out of the coverage area of the network device 110. The embodiments of this disclosure do not limit this aspect.

Optionally, the wireless communication system 100 may further include other network entities such as a network controller, a mobility management entity, etc. The embodiments of this disclosure do not limit this aspect.

It should be understood that the technical solutions of the embodiments of the disclosure can be applied to various communication systems, for example: the fifth generation (5G) system or new radio (NR), long term evolution (LTE) system, LTE frequency division duplex (FDD) system, LTE time division duplex (TDD), etc. The technical solutions provided in this disclosure can also be applied to future communication systems, such as the sixth-generation mobile communication system, satellite communication systems, and so on.

The terminal device in the embodiments of the disclosure may also be referred to as user equipment (UE), access terminal, user unit, user station, mobile station, mobile station (MS), mobile terminal (MT), remote station, remote terminal device, mobile device, user terminal, wireless communication device, user agent, or user device. The terminal device in the embodiments of the disclosure may be a device that provides voice and/or data connectivity to users and can be used to connect people, objects, and machines, such as handheld devices with wireless connectivity, in-vehicle devices, etc. The terminal devices in the embodiments of the disclosure may be mobile phones, tablets (Pad), laptop computers, handheld computers, mobile internet devices (MID), wearable devices, virtual reality(VR) devices, augmented reality (AR) devices, wireless terminals in industrial control (industrial control), wireless terminals in self-driving, wireless terminals in remote medical surgery, wireless terminals in smart grids, wireless terminals in transportation safety, wireless terminals in smart cities, wireless terminals in smart homes, and so on. Optionally, the UE may act as a base station. For example, the UE may act as a scheduling entity that provides sidelink (SL) signals between UEs in vehicle-to-everything (V2X) or device-to-device (D2D) communications. For example, cellular phones and automobiles may communicate with each other using sidelink signals. Cellular phones and smart home devices may communicate directly without relaying communication signals through a base station.

The network device in the embodiments of the disclosure may be a device for communicating with the terminal device and may also be referred to as an access network device or a wireless access network device, such as a base station. The network device in the embodiments of the disclosure may be a wireless access network (RAN) node (or device) that connects the terminal device to the wireless network. The base station may broadly cover various names or be interchangeable with the following names: NodeB, evolved NodeB (eNB), next-generation NodeB (gNB), relay station, access point, transmitting and receiving point (TRP), transmitting point (TP), master station (MeNB), secondary station (SeNB), multi-standard radio (MSR) node, home base station, network controller, access node, wireless node, access point (AP), transmission node, transceiver node, baseband unit (BBU), remote radio unit (RRU), active antenna unit (AAU), remote radio head (RRH), central unit (CU), distributed unit (DU), positioning node, etc. The base station may be a macro base station, micro base station, relay node, donor node, or similar, or a combination thereof. The base station may also refer to a communication module, modem, or chip installed within the aforementioned devices or apparatuses. The base station may also be a device that performs base station functions in device-to-device (D2D), V2X, machine-to-machine (M2M) communications, a network-side device in a 6G network, a device that performs base station functions in future communication systems, etc. The base station may support networks using the same or different access technologies. The embodiments of the disclosure do not limit the specific technology and specific device form used by the network device.

The base station may be fixed or mobile. For example, a helicopter or drone may be configured to act as a mobile base station, with one or more cells moving according to the position of the mobile base station. In other examples, a helicopter or drone may be configured to act as a device that communicates with another base station.

In some deployments, the network device in the embodiments of this disclosure may refer to a CU or DU, or the network device may include both CU and DU. The gNB may also include an AAU.

The network device and the terminal device may be deployed on land, including indoors or outdoors, handheld or vehicle-mounted; they may also be deployed on water surfaces; or they may be deployed on aircraft, balloons, and satellites in the air. The embodiments of the disclosure do not limit the scenarios where the network device and the terminal device are deployed.

It should be understood that the entire or part of the functions of the communication device in this disclosure can also be implemented through software functions running on hardware, or through virtualized functions instantiated on a platform (such as a cloud platform).

## Sidelink Communication In Different Network Coverage Scenarios

Sidelink communication refers to a communication technology based on sidelink. For example, sidelink communication can be device-to-device (D2D) or vehicle-to-everything (V2X) communication. In traditional cellular systems, communication data is received or sent between terminal devices and network devices. In contrast, sidelink communication supports direct communication data transmission between terminal devices. Compared with traditional cellular communication, direct communication data transmission between terminal devices can achieve higher spectral efficiency and lower transmission latency. For example, V2X systems adopt sidelink communication technology.

In sidelink communication, depending on the network coverage situation of the terminal devices, sidelink communication can be classified into sidelink communication in network coverage, sidelink communication in partial network coverage, and sidelink communication out of network coverage.

FIG. 2 is a diagram of a sidelink communication scenario in network coverage. In the scenario illustrated in FIG. 2, both terminal devices 120a are within the coverage area of the network device 110. Therefore, both terminal devices 120a can receive the configuration signaling (which can also be referred to as configuration information in this disclosure) from the network device 110 and determine the sidelink configuration based on the configuration signaling from the network device 110. After both terminal devices 120a have completed the sidelink configuration, they can perform sidelink communication on the sidelink.

FIG. 3 is an example of a sidelink communication scenario in partial network coverage. In the scenario illustrated in Figure 3, terminal device 120a performs sidelink communication with terminal device 120b. Terminal device 120a is within the coverage area of the network device 110 and can receive the configuration signaling from the network device 110. Terminal device 120a can determine the sidelink configuration based on the configuration signaling from the network device 110. Terminal device 120b is out of the network coverage area and cannot receive the configuration signaling from the network device 110. In this case, terminal device 120b can determine the sidelink configuration based on pre-configuration information and/or information carried in the physical sidelink broadcast channel (PSBCH) sent by terminal device 120a, which is within the network coverage area. After both terminal devices 120a and 120b have completed the sidelink configuration, they can perform sidelink communication on the sidelink.

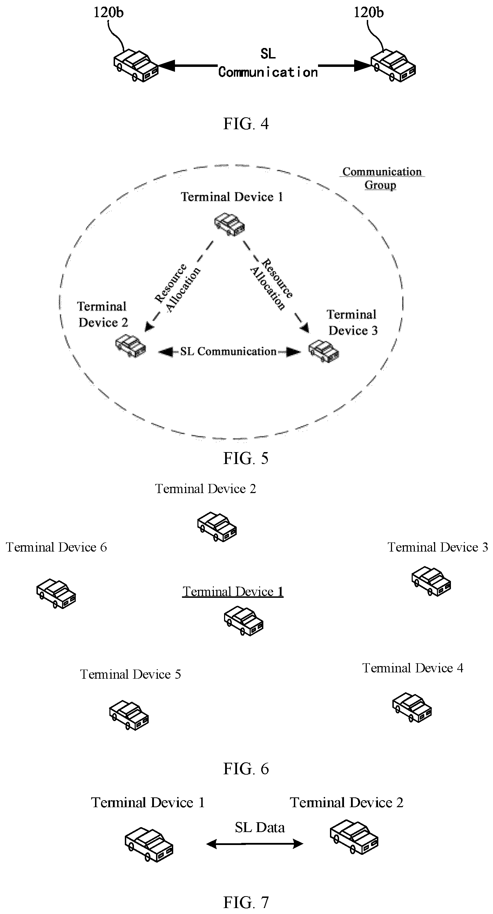

FIG. 4 is an example of a sidelink communication scenario of out-of-network coverage. In the scenario illustrated in FIG. 4, both terminal devices 120b are out of the network coverage area. In this case, both terminal devices 120b can determine the sidelink configuration based on pre-configuration information. After both terminal devices 120b have completed the sidelink configuration, they can perform sidelink communication on the sidelink.

## Sidelink Communication Based on a Central Control Node

FIG. 5 is a scenario diagram of sidelink communication based on a central control node. In this sidelink communication scenario, multiple terminal devices can form a communication group, which has a central control node. The central control node can be one of the terminal devices in the communication group (e.g., terminal device 1 in FIG. 5), which may also be referred to as a cluster head (CH) terminal device. The central control node may be responsible for performing one or more of the following functions: establishing the communication group, managing the joining and leaving of group members in the communication group, coordinating resources within the communication group, allocating sidelink transmission resources to other terminal devices, receiving sidelink feedback information from other terminal devices, and coordinating resources with other communication groups.

## Data Transmission Methods for Sidelink Communication

Some sidelink communication systems (such as long term evolution - vehicle to everything (LTE-V2X)) support a broadcast-based data transmission method (hereinafter referred to as broadcast transmission). For broadcast transmission, the receiving terminal can be any terminal device around the transmitting device. Taking FIG. 6 as an example, terminal device 1 is the transmitting device, and the corresponding receiving terminal for this transmitting device can be any terminal device around terminal device 1, such as terminal devices 2 to 6 in Figure 6.

In addition to broadcast transmission, some communication systems also support unicast-based data transmission methods (hereinafter referred to as unicast transmission) and/or multicast-based data transmission methods (hereinafter referred to as multicast transmission). For example, new radio - vehicle to everything (NR-V2X) aims to support autonomous driving. Autonomous driving imposes higher requirements on data interaction between vehicles. For example, data interaction between vehicles requires higher throughput, lower latency, higher reliability, greater coverage, more flexible resource allocation methods, etc. Therefore, to enhance the performance of data interaction between vehicles, NR-V2X introduces unicast transmission and multicast transmission.

For unicast transmission, there is generally only one receiving terminal. Taking FIG. 7 as an example, terminal device 1 and terminal device 2 are engaged in unicast transmission. Terminal device 1 can be the transmitting device while terminal device 2 can be the receiving terminal, or terminal device 1 can be the receiving terminal while terminal device 2 can be the transmitting device.

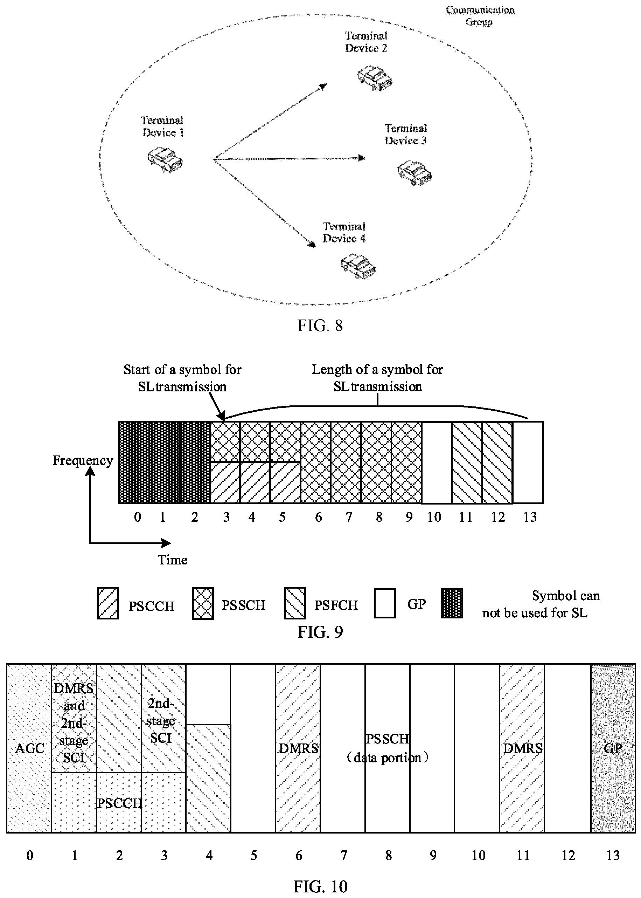

For multicast transmission, the receiving terminal(s) can be a terminal device within a communication group, or it can be terminal device within a certain transmission range. Taking FIG. 8 as an example, terminal devices 1, 2, 3, and 4 form a communication group. If terminal device 1 transmits data, the other terminal devices within the group (terminal devices 2 to 4) can all be receiving terminals.

## Slot Structure in NR-V2X

The NR-V2X system has lower latency compared to the LTE-V2X system. Therefore, the multiplexing method of the physical sidelink control channel (PSCCH) and the physical sidelink shared channel (PSSCH) in the NR-V2X system has been redesigned relative to the LTE-V2X system. The time-domain resource allocation in NR-V2X is based on the slot as the allocation granularity. Within a slot, the first orthogonal frequency division multiplexing (OFDM) symbol is fixed for automatic gain control (AGC). On the AGC symbol, the UE can replicate the information transmitted on the second symbol. The last symbol of the slot is reserved for transmission/reception switching, allowing the UE to switch from a transmission (or reception) state to a reception (or transmission) state.

In the NR-V2X system, the PSSCH and its associated PSCCH are transmitted in the same slot. Except for the AGC symbol, the PSCCH can occupy either 2 or 3 OFDM symbols, and the time-domain position of the PSCCH can start from the 2nd time-domain symbol available for sidelink transmission within the slot (the 1st time-domain symbol is for AGC).

The number of physical resource blocks (PRBs) occupied by the PSCCH in the frequency domain is configurable. For example, the PSCCH can occupy {10, 12, 15, 20, 25} PRBs in the frequency domain. In the frequency domain, the number of PRBs occupied by the PSCCH is within a subband of the PSSCH, if the number of PRBs occupied by the PSCCH is less than the size of one subchannel of the PSSCH, or if the frequency-domain resources of the PSSCH include multiple subchannels, the PSCCH can be frequency-division multiplexed with the PSSCH on the OFDM symbols where the PSCCH is located.

In the NR-V2X system, the parameters *sl-startSLsymbols* and *sl-lengthSLsymbols* can be used to configure the start point and length of the time-domain symbols (referred to as symbols) within a slot for sidelink transmission. The last symbol among the symbols configured for sidelink transmission within a slot using the parameters *sl-startSLsymbols* and *sl-lengthSLsymbols* is used as a guard period (GP), and the PSSCH and PSCCH can only use the remaining time-domain symbols.

In some embodiments, a sidelink slot in NR-V2X may also has a physical sidelink feedback channel (PSFCH) in addition to the PSCCH and PSSCH. If PSFCH transmission resources are configured within a slot, the PSSCH and PSCCH cannot occupy the symbols used for PSFCH transmission as well as the AGC and GP symbols preceding the symbols used for PSFCH transmission.

FIG. 9 illustrates an example of the slot structure for certain sidelink communication systems (such as NR-V2X systems). As illustrated in FIG. 9, the network-configured parameters are *sl-StartSymbol=3* and *sl-LengthSymbols=11*, meaning that 11 symbols starting from a symbol with index 3 within a slot are available for sidelink transmission. In this slot, there are PSFCH transmission resources, with the PSFCH occupying symbols 11 and 12, where symbol 11 serves as the AGC symbol for PSFCH, and symbols 10 and 13 are used as GPs. Therefore, the symbols can be used for PSSCH transmission are symbols 3 to 9. The PSCCH occupies 3 time-domain symbols, namely symbols 3, 4, and 5, with symbol 3 typically used as the AGC symbol.

The PSSCH can be used to carry 2nd-stage sidelink control information (SCI) and sidelink shared channel (SL-SCH). The 2nd-stage SCI can have different SCI formats. For example, in 3GPP Release 16, two 2nd-stage SCI formats are defined, namely SCI format 2-A and SCI format 2-B. SCI format 2-B is suitable for multicast communication that requires sidelink hybrid automatic repeat request (HARQ) feedback based on distance information; SCI format 2-A is suitable for other scenarios, such as unicast, multicast, and broadcast that do not require sidelink HARQ feedback, unicast communication that requires sidelink HARQ feedback, and multicast communication that requires feedback of acknowledgement (ACK) or negative acknowledgement (NACK). In 3GPP Release 17, an additional 2nd-stage SCI format, SCI format 2-C, was introduced to indicate the reference resource set and trigger signaling under specific circumstances.

FIG. 10 illustrates an example of the structure of 2nd-stage SCI within a slot. As illustrated in FIG. 10, the modulation symbols of the 2nd-stage SCI are mapped starting from the symbol where the first PSSCH modulation-and-demodulation reference signal is located, in a manner that prioritizes the frequency domain before the time domain. On this symbol, the modulation symbols of the 2nd-stage SCI are multiplexed with the resource elements (REs, also known as resource units) of the demodulation reference signal (DMRS) through interleaving. Additionally, the modulation symbols of the 2nd-stage SCI cannot be mapped to the REs occupied by the phase tracking reference signal (PT-RS).

In sidelink communication systems, UEs autonomously select resources or determine transmission resources based on network-based sidelink resource scheduling, which may result in different UEs transmitting PSCCH on the same time-frequency resources. To ensure that the receiving UE can detect at least one PSCCH in the event of PSCCH resource conflicts, the LTE-V2X system employs a PSCCH DMRS randomization design. Specifically, when transmitting the PSCCH, a UE can randomly select a value from {0, 3, 6, 9} as the cyclic shift for the DMRS. If multiple UEs transmit PSCCH DMRS with different cyclic shifts on the same time-frequency resources, the receiving UE can still detect at least one PSCCH through the orthogonal DMRS. For the same reason, in NR-V2X, three PSCCH DMRS frequency-domain orthogonal covering codes (OCCs) are introduced for random selection of the transmitting UE, as illustrated in Table 1. The *i-th* bit of the OCC is applied to the i-th DMRS RE within a resource block (RB), thereby distinguishing different UEs.

Table 1

| OCC index | OCC | | |
|---|---|---|---|
| | $i=0$ | $i=1$ | $i=2$ |
| 0 | 1 | 1 | 1 |
| 1 | 1 | $e^{j2/3\pi}$ | $e^{-j2/3\pi}$ |
| 2 | 1 | $e^{-j2/3\pi}$ | $e^{j2/3\pi}$ |

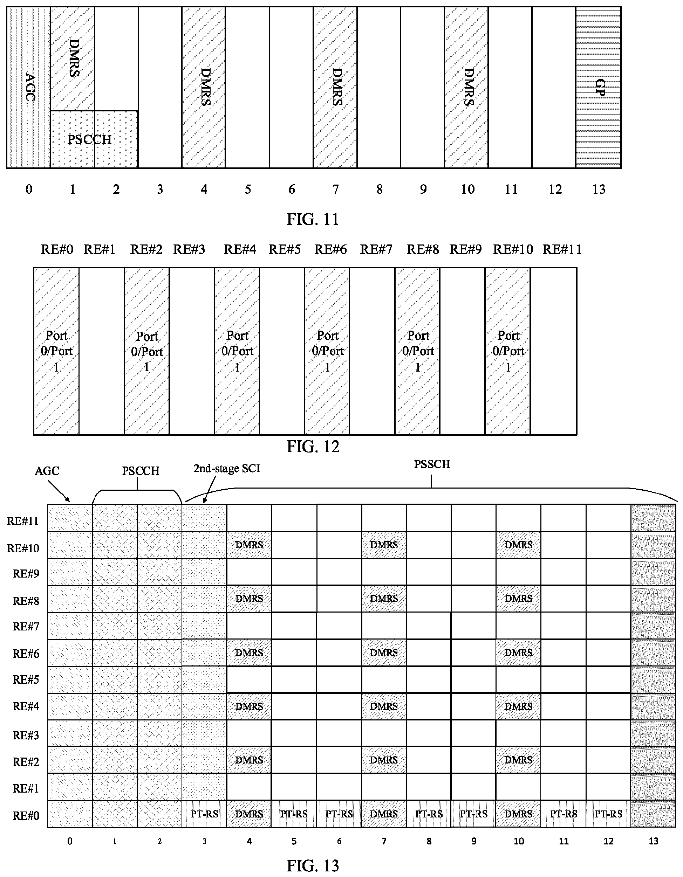

In some sidelink communication systems (such as NR-V2X systems), the DMRS of the PSSCH draws on the design from the NR Uu interface and employs multiple time-domain PSSCH DMRS patterns. Within a resource pool, the number of available DMRS patterns is related to the number of PSSCH symbols in the resource pool. For a specific number of PSSCH symbols (including the 1st AGC symbol) and PSCCH symbols, the available DMRS patterns and the positions of each DMRS symbol within the patterns are illustrated in Table 2. FIG. 11 illustrates the time-domain positions of 4 DMRS symbols within a slot when the PSSCH has 13 symbols.

Table 2

| Number of PSSCH Symbols (including the 1st AGC symbol) | DMRS Symbol Position (relative to position of the 1st AGC symbol) | | | | | |
|---|---|---|---|---|---|---|
| | Number of PSCCH Symbols=2 | | | Number of PSCCH Symbols=3 | | |
| | Number of DMRS Symbols | | | Number of DMRS Symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |

(continued)

| Number of PSSCH Symbols (including the 1st AGC symbol) | DMRS Symbol Position (relative to position of the 1st AGC symbol) | | | | | |
| | Number of PSCCH Symbols=2 | | | Number of PSCCH Symbols=3 | | |
| | Number of DMRS Symbols | | | Number of DMRS Symbols | | |
| | 2 | 3 | 4 | 2 | 3 | 4 |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

In some embodiments, if multiple time-domain DMRS patterns are configured within a resource pool, the specific time-domain DMRS pattern to be used can be selected by the transmitting UE and indicated in the 1st-stage SCI. This design allows UEs in high-speed motion to select high-density DMRS patterns to ensure the accuracy of channel estimation; whereas for UEs in low-speed motion, low-density DMRS patterns can be used to improve spectral efficiency.

The method for generating the PSSCH DMRS sequence is almost identical to that for the PSCCH DMRS sequence, with the only difference lies in that, in the initialization formula $c_{init}$. for the pseudo-random sequence $c(m)$, $N_{ID} = \sum_{i=0}^{L-1} p_i \cdot 2^{L-1-i}$ , where $p_i$ is the $i^{th}$ bit of cyclic redundancy check (CRC) of the PSCCH scheduling the PSSCH, $L$ is the number of bits of PSCCH CRC, for example, $L=24$.

In the NR communication system, PDSCH and PUSCH support two types of frequency-domain DMRS patterns, namely DMRS frequency-domain type 1 and DMRS frequency-domain type 2. For each frequency-domain type, there are two different types of symbols: single-DMRS-symbol and double-DMRS-symbol. The single-symbol DMRS frequency-domain type 1 supports 4 DMRS ports, while the single-symbol DMRS frequency-domain type 2 can support 6 DMRS ports. In the case of double DMRS symbols, the number of supported ports is doubled. However, in sidelink communication systems (such as NR-V2X), since the PSSCH only needs to support a maximum of two DMRS ports, only single-symbol DMRS frequency-domain type 1 may be supported. FIG. 12 illustrates an example of single-symbol DMRS frequency-domain type 1.

## PT-RS in NR-V2X

In NR-V2X, PT-RS is supported in FR2. The PT-RS in the NR-V2X system largely borrows the design of the OFDM-based PT-RS in the uplink of the Uu interface, including the sequence of the PT-RS and its time-frequency density. In the NR-V2X system, the antenna port used by the PT-RS is the same as that of the DMRS of the PSSCH transmitted together with the PT-RS. If the PSSCH uses two transmission ports, each PT-RS port is uniquely associated with one PSSCH DMRS port.

The PT-RS sequence is based on the DMRS sequence associated with the PT-RS sequence on the first PSSCH DMRS symbol within the slot. During the physical resource mapping of the PT-RS, the time-domain spacing can be 1, 2, or 4 OFDM symbols. The transmitting device and receiving device determine the time-domain spacing of the PT-RS based on the modulation and coding scheme (MCS) threshold configured in the resource pool and the MCS used for the transmitted/received PSSCH. As illustrated in Table 3, ptrs-MCS1 to ptrs-MCS4 are the MCS thresholds configured by the radio resource control (RRC) layer for the current resource pool. The frequency-domain spacing of the PT-RS can be 2 or 4 PRBs, determined by the bandwidth threshold configured by the RRC layer and the transmission bandwidth of the PSSCH. The details are illustrated in Table 4, where NRB0 and NRB1 are the bandwidth thresholds configured by the RRC layer for the current resource pool.

Table 3

| PSSCH MCS ($I_{MCS}$) | PT-RS time-domain spacing |
|---|---|
| $I_{MCS}$<ptrs-MCS1 | no PT-RS transmission |
| ptrs-MCS 1$\leq I_{MCS}$<ptrs-MCS2 | 4 OFDM Symbols |
| ptrs-MCS2$\leq I_{MCS}$<ptrs-MCS3 | 2 OFDM Symbols |
| ptrs-MCS3$\leq I_{MCS}$<ptrs-MCS4 | 1 OFDM Symbols |

Table 4

| PSSCH transmission bandwidth (NRB) | PT-RS frequency-domain spacing |
|---|---|
| NRB < NRB0 | no PT-RS transmission |
| NRB0≤NRB < NRB1 | 2 PRBs |
| NRB1≤NRB | 4 PRBs |

To reduce the probability of different UEs transmitting PT-RS on the same resources, within a given PT-RS frequency-domain spacing, the CRC of the PSCCH scheduling the PSSCH is used to determine the specific PRB for PT-RS transmission. The RE positions for PT-RS within that PRB are then defined by the RRC-configured RE offset parameter and the DMRS port associated with the PT-RS, as illustrated in Table 5.

Table 5

| PSSCH DMRS Port associated with PT-RS | RE for PT-RS transmission | | | |
|---|---|---|---|---|
| | RE offset parameter configured for a resource pool | | | |
| | offset00 | offset01 | offset10 | offset11 |
| 1000 | 0 | 2 | 6 | 8 |
| 1001 | 2 | 4 | 8 | 10 |

Moreover, if the REs for transmitting PT-RS determined according to the above rules overlap with the REs occupied by the PSCCH or PSSCH DMRS, the PT-RS on the overlapping REs will be punctured. Furthermore, if the transmitting UE also sends a channel state information reference signal (CSI-RS), it must avoid overlapping with the PT-RS when determining the REs for transmitting CSI-RS. FIG. 13 provides an example, in which the PSSCH DMRS port associated with the PT-RS is 1000, the RE offset is 00, and the time-domain spacing of the PT-RS is one OFDM symbol.

## CSI-RS in NR-V2X

To better support unicast communication, NR-V2X supports CSI-RS, which is transmitted only when the following three conditions are met: the UE transmits a corresponding PSSCH, meaning that the UE cannot transmit the CSI-RS alone; the sidelink channel state information (CSI) reporting is activated by higher-layer signaling; when the sidelink CSI reporting is activated by higher-layer signaling, the corresponding bit in the 2nd-stage SCI transmitted by the UE triggers the sidelink CSI reporting.

Since on the NR sidelink, the PSSCH supports a maximum of 2-layer transmission, the maximum number of CSI-RS ports is 2. On the NR sidelink, only a CSI-RS transmission with a density of 1 is supported, meaning that for any port, there is only one CSI-RS within a PRB. In one transmission, the number of CSI-RS ports and the time-frequency location of the REs used for CSI-RS transmission are determined by the transmitting UE and notified to the receiving UE through PC5-RRC.

The time-frequency resource location information of the CSI-RS indicated by PC5-RRC includes the frequency-domain position of the CSI-RS REs and the start symbol in the time domain. The slot in which the CSI-RS is located is the same as the slot in which the SCI that triggers the CSI reporting is located. The CSI-RS type is assumed to be non-zero-power (NZP) CSI-RS. To avoid affecting the resource mapping of the PSCCH and the 2nd-stage SCI, the CSI-RS must not conflict with the time-frequency resources occupied by the PSCCH, nor can it be transmitted on the same OFDM symbol as the 2nd-stage SCI. Since the channel estimation accuracy is higher for the OFDM symbol occupied by the PSSCH DMRS, and because the two-port CSI-RS will occupy two consecutive REs in the frequency domain, the CSI-RS must not be transmitted on the same OFDM symbol as the PSSCH DMRS. Additionally, the CSI-RS must not conflict with the PT-RS.

## Downlink-Based Positioning

In downlink-based positioning, the parameter configuration for the downlink positioning reference signal (DL PRS) can include a 4-layer configuration, from high to low, which are the positioning frequency layer (FL), the TRP layer, the PRS resource set, and the PRS resource. The following provides a detailed introduction to the parameter configuration for the DL PRS.

The network device can provide the terminal device with DL PRS configurations for 4 positioning frequency layers. Among them, the parameter structure of each positioning frequency layer provides the following DL PRS configuration parameters: the subcarrier spacing of the DL PRS; the cyclic prefix (CP) length of the DL PRS; the frequency-domain resource bandwidth of the DL PRS; the frequency-domain start position of the DL PRS resources; the frequency-domain reference point "Point A" of the DL PRS; and the comb size "Comb-N" of the DL PRS.

Among them, the value of the frequency-domain resource bandwidth of the DL PRS can be the number of PRBs allocated to the DL PRS. In some cases, the minimum value of the frequency-domain resource bandwidth of the DL PRS can be 24 PRBs, and the granularity can be 4 PRBs. The maximum value of the frequency-domain resource bandwidth of the DL PRS can be 272 PRBs.

The frequency-domain start position of the DL PRS resources is used to indicate the index number of the start PRB for the frequency-domain resource allocated for the DL PRS. The index number of the PRB is defined relative to the frequency-domain reference point "Point A" of the DL PRS.

The above DL PRS configuration parameters corresponding to each positioning frequency layer can be applied to all DL PRS resources included in that positioning frequency layer. That is to say, within one positioning frequency layer, all DL PRSs from multiple different TRPs can use the same subcarrier spacing and CP length, the same comb size, be transmitted on the same frequency subband, and occupy the same bandwidth. Such a design allows the terminal device to simultaneously receive and measure DL PRSs from multiple different TRPs on the same frequency point.

In some scenarios, the parameters of the TRP layer can include an ID parameter for uniquely identifying the positioning TRP, such as the physical cell ID of the TRP, the NR cell global identifier (NCGI) of the TRP, the absolute radio frequency channel number (ARFCN) of the TRP, etc. Generally, each TRP layer can configure a maximum of 2 DL PRS resource sets.

For each DL PRS resource set, the configuration parameters for the DL PRS resource set can be applied to all DL PRS resources included in that DL PRS resource set. The configuration parameters for a DL PRS resource set include one or more of the following parameters: the DL PRS resource set identification ID (denoted by "nr-DL-PRS-ResourceSetID"); the transmission periodicity and slot offset of the DL PRS (denoted by "dl-PRS-Periodicity-and-ResourceSetSlotOffset"); the repetition factor of the DL PRS resource (denoted by "dl-PRS-ResourceRepetitionFactor"); the time interval between repetition transmissions (repetitions for short) of the DL PRS resource (denoted by "dl-PRS-ResourceTimeGap"); the muting configuration of the DL PRS; and the number of OFDM symbols occupied by the DL PRS resource (denoted by "dl-PRS-NumSymbols").

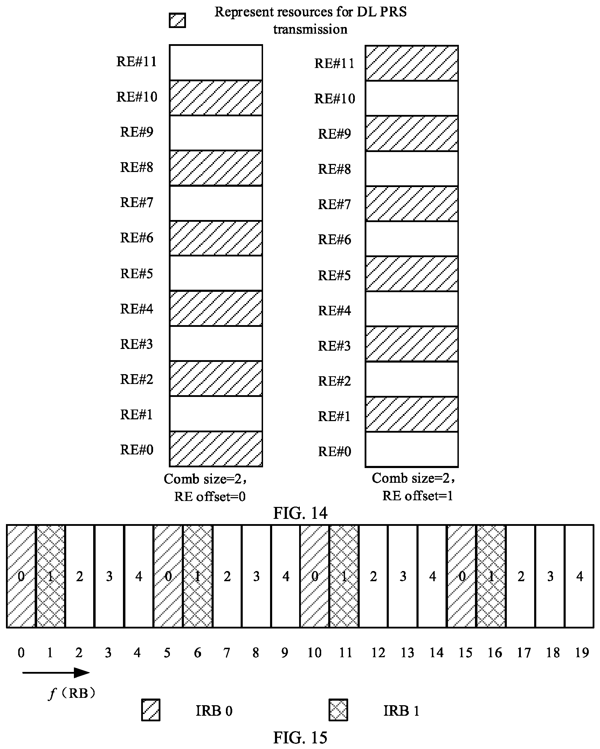

The above transmission periodicity and slot offset of the DL PRS are used to indicate the time-domain transmission behavior of all DL PRS resources in the DL PRS resource set. In some implementations, the minimum configurable transmission periodicity of the DL PRS is 4 milliseconds, and the maximum configurable transmission periodicity of the DL PRS is 10240 milliseconds. Currently, the DL PRS configuration supports flexible subcarrier spacing including 15 kHz, 30 kHz, 60 kHz, and 120 kHz. For different subcarrier spacing, the range of configurable DL PRS transmission periodicity values can be the same. FIG. 14 illustrates a schematic diagram of resources for transmitting the DL PRS when the comb size is 2 and the RE offsets are 0 and 1, respectively.

The above repetition factor of the DL PRS resource is used to indicate the number of repetitions of the DL PRS resources within each DL PRS transmission period. Currently, the repetitions of the same DL PRS resource can be used by the terminal device to aggregate the energy of the DL PRS from multiple transmissions, which helps to increase the coverage range of the DL PRS and improve positioning accuracy. In the FR2 system, the repetitions of the DL PRS resources can also be used by the terminal device to perform receive-beam sweeping. The terminal device can use different receive-beams to receive the repetitions of the same DL PRS resource, thereby finding the optimal TRP transmit-beam to match and the receive-beam of the terminal device. On the other hand, the repetitions of the DL PRS resources will increase the transmission overhead of the DL PRS. Currently, in stage to control the transmission overhead, in the 3GPP NR R16 specification, the repetition factor of the DL PRS resources can take values of 1, 2, 4, 6, 8, 16, and 32.

The above time interval between repetitions of the DL PRS resources is used to indicate the number of slots between two consecutive repetitions of the same DL PRS resource.

The above muting configuration of the DL PRS is used to indicate that the DL PRS is not transmitted on some allocated time-frequency resources. The muting configuration can be understood as the DL PRS are not to be transmitted on all allocated time-frequency resources but intentionally not to be transmitted on some specified time-frequency resources. On the one hand, the muting configuration can avoid collisions between the DL PRS and other signals (e.g., SSB). On the other hand, the muting configuration can avoid interference between signals transmitted by different TRPs. For example, the muting configuration can be used to indicate that the DL PRS of a TRP close to the terminal device is not to be transmitted and to configure the DL PRS of a TRP far from the terminal device to be transmitted. In this way, the terminal device can receive the DL PRS from the far TRP without interference from the muted TRP.

The above number of OFDM symbols occupied by the DL PRS resources is used to indicate the number of OFDM symbols allocated to a DL PRS resource within one slot.

Generally, the DL PRS configuration parameters included in the above TRP layer parameters can be applied to all DL PRS resources in the DL PRS resource set corresponding to the TRP layer. Therefore, DL PRS resources belonging to the same DL PRS resource set will transmit the DL PRS with the same transmission periodicity, the same number of repetitions, and occupy the same number of OFDM symbols.

In some implementations, for each DL PRS resource, the DL PRS configuration parameters can also include: the DL PRS resource identification ID (denoted by "nr-DL-PRS-ResourceID"); the sequence ID of the DL PRS (denoted by "dl-PRS-SequenceID"); the start frequency-domain resource element offset of the DL PRS (denoted by "dl-PRS-CombSizeN-AndReOffset"); the slot offset of the DL PRS resource (denoted by "dl-PRS-ResourceSlotOffset"); the OFDM symbol offset of the DL PRS (denoted by "dl-PRS-ResourceSymbolOffset"); and the quasi co-location (QCL) information of the DL PRS (denoted by "dl-PRS-QCL-Info").

The above start frequency-domain resource element offset of the DL PRS is used to indicate the frequency-domain resource element offset value used for resource mapping on the $1^{st}$ allocated OFDM symbol of a DL PRS resource within one slot. Generally, based on this parameter and the relative offset value defined in TS 38.211, the terminal device can determine the frequency-domain resource element offset value used for resource mapping on each OFDM symbol.

The above slot offset of the DL PRS resource is used to indicate the slot offset relative to the DL PRS resource set. This parameter can determine the slot position of each DL PRS resource.

The above OFDM symbol offset of the DL PRS is used to indicate the time-frequency resource allocation position of the DL PRS resource within one slot. This parameter can be used to indicate the index number of the start OFDM symbol within the slot.

The above QCL information of the DL PRS is used to indicate the QCL information of the DL PRS.

## Sidelink Over Unlicensed Spectrum (SL-U)

When performing sidelink transmission over unlicensed spectrum, the sidelink transmission needs to meet specific regulatory requirements, including the minimum occupied channel bandwidth (OCB) and maximum power spectral density (PSD) requirements. For the OCB requirement, when a UE uses a channel for data transmission, the occupied channel bandwidth shall not be less than 80% of one channel bandwidth. For the maximum PSD requirement, the transmit power of the UE per 1MHz shall not exceed 10dBm. To satisfy the OCB and PSD regulatory requirements, sidelink transmission over unlicensed spectrum needs to adopt an interlaced resource block (IRB) structure. One IRB includes N frequency-discrete RBs, with a total of M IRBs in the frequency band. The $m^{th}$ IRB includes RBs as {m, M+m, 2M+m, 3M+m,...}.

FIG. 15 illustrates a schematic diagram of the interlaced resource block structure. As illustrated in FIG. 15, the system bandwidth includes 20 RBs, comprising 5 IRBs (i.e., M=5), where each IRB includes 4 RBs (i.e., N=4). The frequency spacing between two adjacent RBs belonging to the same IRB is identical, i.e., separated by 5 RBs. The numbers in the boxes in the figure indicate the IRB indices.

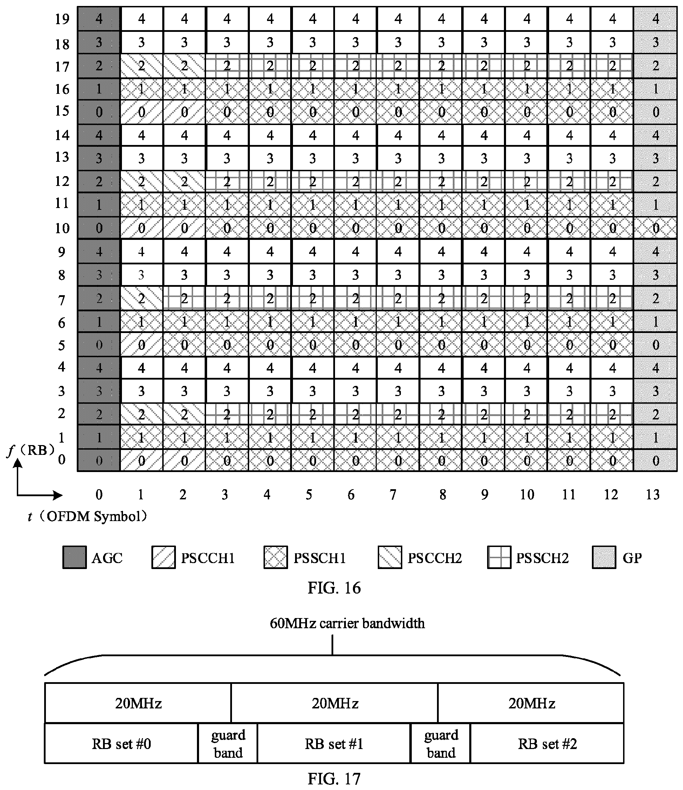

In the SL-U system, if IRB-based resource allocation granularity is adopted, channels such as PSCCH and PSSCH in the SL-U system should all be based on the IRB structure. FIG. 16 illustrates an example diagram of the frame structure of the SL-U system, where the frame structure example in FIG. 16 is for a slot having only PSCCH and PSSCH bud not have PSFCH. As illustrated in FIG. 16, the bandwidth includes 20 RBs, configured with 5 IRB resources (i.e., M=5), where each IRB resource includes 4 RBs. The numbers in the boxes of FIG. 16 indicate the IRB indices. In FIG. 16, the system configures the PSCCH to occupy 1 IRB resource in frequency domain and 2 OFDM symbols in time domain. The PSSCH is in IRB granularity, where the $1^{st}$ symbol in the slot is an AGC symbol and the last symbol is a GP symbol. In FIG. 16, PSSCH 1 occupies IRB#0 and IRB#1, with its corresponding PSCCH 1 occupying IRB#0. PSSCH 2 occupies IRB#2, with its corresponding PSCCH 2 also occupying IRB#2. It should be noted that for simplicity, FIG.16 does not illustrate the resources occupied by 2nd-stage SCI and resources occupied by PSCCH DMRS or PSSCH DMRS.

Over unlicensed spectrum, a UE may access the channel through listen before talk (LBT). LBT is performed with 20MHz granularity in frequency domain, where each 20MHz may be referred to as an RB Set. One carrier may include multiple RB sets, with guard intervals between RB sets, as illustrated in Figure 17.

Over unlicensed spectrum, a UE needs to perform LBT first and can only access the channel after passing LBT, but the time for the UE to complete LBT is uncertain. In some implementations, if the UE is restricted to start transmission only from the beginning of a slot, the UE may miss transmission opportunities due to failing to complete LBT beforehand. Therefore, in SL-U, consider to add an additional transmission start point within one slot, i.e., multi-start transmission, where for example the additional start point may be the $3^{rd}$ or $4^{th}$ OFDM symbol within the slot.

## Sidelink based Positioning

In 3GPP Release 17, 3GPP RAN studies sidelink based positioning, such as the "NR positioning enhancement" and the "scenarios and requirements for NR positioning use cases in in-coverage, partial coverage, and out-of-coverage conditions." The latter study focused on V2X and public safety use cases. Additionally, certain organizations (e.g., the 3GPP SA1 Working Group) have established requirements for "Ranging-Based Services" and defined positioning accuracy requirements for IoT applications in out-of-coverage scenarios. 3GPP needs to research and develop sidelink-based positioning solutions to support the use cases, scenarios, and requirements identified in these activities.

To improve positioning accuracy, particularly for UEs located outside cellular network coverage, 3GPP completed feasibility and performance studies on positioning techniques based on sidelink positioning reference signals (SL PRS) during the early stages of Release 18. The next step is to standardize sidelink-based positioning solutions (including ranging/direction-finding) in NR systems. The standardization work for sidelink-based positioning primarily includes the following aspects.

Standardization work 1: Standardization of the SL PRS. The SL PRS may adopt a comb-based frequency-domain structure (without excluding full RE mapping modes) and use pseudo-random sequence-based formats. The SL PRS may be designed based on existing DL-PRS sequences, supporting SL PRS bandwidths of up to 100 MHz in FR1.

Standardization work 2: Standardization of measurements for sidelink positioning. For example, standardizing measurements to support positioning methods based on SL roundtrip time (RTT), SL angle of arrival (AOA), and SL time difference of arrival (TDOA).

Standardization work 3: Standardization of SL PRS resource allocation schemes. For example, SL PRS resource allocation schemes may include Scheme 1 and Scheme 2, where Scheme 1 corresponds to network-allocated SL PRS resources, and Scheme 2 corresponds to UE-autonomous SL PRS resource selection. In some implementations, the system supports shared resource pools between SL PRS and Rel-16/17/18 sidelink communication as well as dedicated SL PRS resource pools. For Scheme 2, one or more of the following may need to be studied and standardized: channel sensing-based resource selection, random resource selection, congestion control, and UE coordination-based resource selection.

Standardization Work 4: Standardization of open-loop power control mechanisms for SL PRS transmission.

Currently, certain communication systems (e.g., NR systems) aim to introduce sidelink-based positioning to enhance positioning technologies. That is, reference signals for sidelink positioning (also referred to as "SL PRS") may be transmitted over the sidelink. However, how terminal devices receive and/or transmit SL PRS remains undefined.

To address the aforementioned issues, this disclosure provides a method for sidelink communication. In this method, a first terminal device may transmit or receive a first sidelink reference signal for sidelink positioning in a first slot. That is to say, the first terminal device may be the transmitting end of the first sidelink reference signal, or the first terminal device may be the receiving end of the first sidelink reference signal. In the embodiments of the disclosure, the first terminal device is not specifically limited. The first terminal device may be any terminal device related to sidelink positioning. In some embodiments, the first terminal device may be a terminal device that transmits the first sidelink reference signal or receives the first sidelink reference signal. In other words, the first terminal device may be a transmitting device or a receiving terminal of the first sidelink reference signal. In some embodiments, the first terminal device may be other entities related to sidelink positioning, such as a serving terminal device (server UE), etc.

In some implementations, a serving terminal device is configured to determine location information of the first terminal device. In other words, the functionality of the serving terminal device is the same as that of a positioning server, and the serving terminal device can implement some or all of the functions of the positioning server.

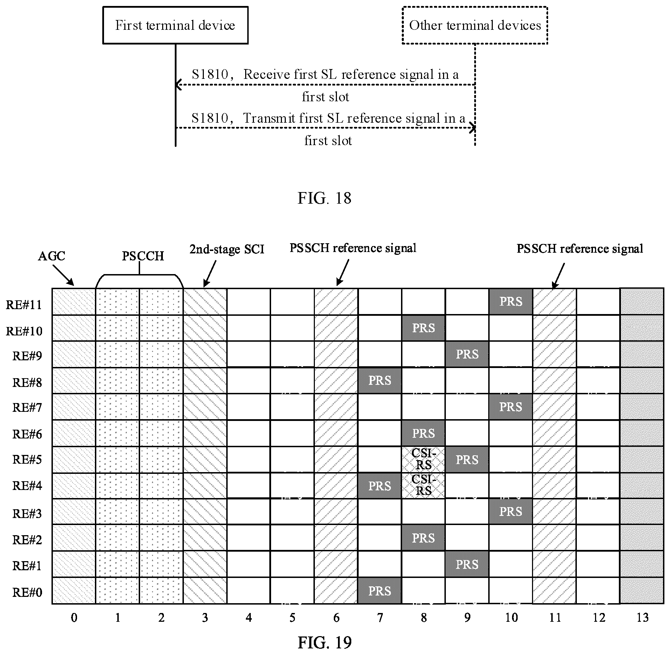

For ease of understanding, a method for sidelink communication according to the embodiments of the disclosure is described below with reference to FIG. 18. FIG. 18 is a schematic flowchart of the method for sidelink communication according to the embodiments of the disclosure. The method illustrated in FIG. 18 may include step S1810.

In S1810, a first terminal device transmits or receives a first sidelink reference signal in a first slot, where the first sidelink reference signal is used for sidelink positioning.

For example, the first terminal device transmits in the first slot the first sidelink reference signal used for sidelink positioning to other terminal devices. For another example, the first terminal device receives in the first slot the first sidelink reference signal used for sidelink positioning from other terminal devices.

In some implementations, the first sidelink reference signal is used for sidelink positioning. For example, the first sidelink reference signal may be used to position the first terminal device. As another example, the first sidelink reference signal may be used to position other terminal devices. In some scenarios, the first sidelink reference signal may be the SL PRS (sidelink positioning reference signal) mentioned earlier. The first reference signal may also be other reference signals usable for sidelink positioning, which is not limited in the embodiments of the disclosure.

In some implementations, the first sidelink reference signal may be transmitted based on resources in a shared resource pool. This shared resource pool may be understood as a shared resource pool for the transmission of the first sidelink reference signal and for sidelink communication. The shared resource pool for sidelink communication may, for example, include resources for transmitting and/or receiving sidelink data and/or transmitting and/or receiving of sidelink control information (SCI).

In other scenarios, the first sidelink reference signal may be transmitted based on resources in a dedicated resource pool. This dedicated resource pool may be understood as a resource pool dedicated to transmitting sidelink positioning reference signals, or specifically, a resource pool dedicated to the transmission of the first sidelink reference signal.

No matter whether in a dedicated resource pool or a shared resource pool, the time-domain resources (e.g.,

OFDM symbols) occupied by the first sidelink reference signal may collide with the time-domain resources used for transmitting other sidelink signals (e.g., a second sidelink reference signal). In this case, how to transmit the first and second sidelink reference signals becomes a critical problem to solve.

Therefore, to address the above issue, this disclosure proposes a transmission scheme for sidelink reference signals, where the OFDM symbol(s) occupied by the first sidelink reference signal may or may not be used for transmitting the second sidelink reference signal. This helps align the understanding between the transmitting device and receiving device of the first reference signal, thereby improving the transmission success rate of the first reference signal.

In some implementations, the OFDM symbol(s) occupied by the first sidelink reference signal may be used for transmitting the second sidelink reference signal, meaning that the OFDM symbols occupied by the first sidelink reference signal may partially or fully overlap with those occupied by the second sidelink reference signal. For example, all OFDM symbols occupied by the first sidelink reference signal may be used to transmit the second sidelink reference signal, or only a part of OFDM symbols occupied by the first sidelink reference signal may be used to transmit the second sidelink reference signal. In other words, the resources for transmitting the second sidelink reference signal may be mapped onto the OFDM symbols occupied by the first sidelink reference signal.

If the OFDM symbols occupied by the first sidelink reference signal can be used for transmitting the second sidelink reference signal, the frequency-domain resources occupied by the second sidelink reference signal in these OFDM symbols may differ from those occupied by the first sidelink reference signal, helping to avoid collision between resources occupied by the first sidelink reference signal and resources occupied by the second sidelink reference signal. For example, the resource elements (REs) occupied by the second sidelink reference signal in these OFDM symbols may be different from those occupied by the first sidelink reference signal. That is, the REs occupied by the second sidelink reference signal and the REs occupied by the first sidelink reference signal may be located at different frequencies on the same OFDM symbol.

In some implementations, the OFDM symbols occupied by the first sidelink reference signal may not be used for transmitting the second sidelink reference signal, meaning that the OFDM symbols occupied by the first sidelink reference signal must not overlap, coincide, or be the same as those occupied by the second sidelink reference signal. For example, none of the REs on these OFDM symbols may be used to transmit the second sidelink reference signal. In other words, the resources for transmitting the second sidelink reference signal may skip or not be mapped onto the OFDM symbols occupied by the first sidelink reference signal.

It should be noted that the embodiments of the disclosure describe the solution using OFDM symbols as an example. However, the OFDM symbols in the disclosure may be replaced with other time-domain units, such as slots, frames, subframes, etc. Alternatively, they may refer to a future time-domain unit introduced in future communication systems.

Additionally, in the embodiments of the disclosure, the OFDM symbols for transmitting the first sidelink reference signal may be pre-configured. For example, the first terminal device may be pre-configured with the OFDM symbols for transmitting the first sidelink reference signal upon manufacturing. Alternatively, these OFDM symbols for transmitting the first sidelink reference signal may be preconfigured, e.g., specified in a communication protocol. Alternatively, the OFDM symbols for transmitting the first sidelink reference signal may be preconfigured by a network device. For instance, the network device may configure the OFDM symbols for transmitting the first sidelink reference signal for the first terminal device. The embodiments of the disclosure impose no limitation on this. Alternatively, the OFDM symbols for transmitting the first sidelink reference signal may be indicated by another terminal device. For example, said another terminal device may send indication information to the first terminal device, to indicate the OFDM symbols for transmitting the first sidelink reference signal. The embodiments of the disclosure do not limit the indication information, which may in some implementations include higher-layer signaling, such as: service layer protocol profile (SLPP) layer signaling, and/or radio resource control (RRC) layer signaling.

It should be noted that, in the embodiments of the disclosure, if the OFDM symbols for transmitting the first sidelink reference signal are pre-configured or configured, they may be determined based on configuration information. The embodiments of the disclosure do not specifically limit the configuration information, which may include: the start position of the OFDM symbols for transmitting the first sidelink reference signal, and/or the number of OFDM symbols for transmitting the first sidelink reference signal.

In some implementations, the position of REs occupied by the first sidelink reference signal on the OFDM symbols may be determined based on pre-configured or configured information. For example, the first terminal device may determine, based on pre-configured or configured information, the comb size and/or the RE offset of the first sidelink reference signal on the occupied OFDM symbols in the first slot, thereby further determining the RE positions of the first sidelink reference signal on the occupied OFDM symbols.

In the embodiments of the disclosure, the second sidelink reference signal is not specifically limited. For instance, the second sidelink reference signal may include: CSI-RS and/or PT-RS. For ease of understanding, the following describes the proposed solution with the second sidelink reference signal being CSI-RS or PT-RS as examples respectively in Embodiments 1 and 2.

Embodiment 1: The second sidelink reference signal is CSI-RS. For ease of understanding, transmission methods for the first sidelink reference signal and the second sidelink reference signal in embodiments of the disclosure will be described with reference to Case 1-1 to Case 1-3.

Case 1-1: CSI-RS and the first sidelink reference signal are transmitted on different OFDM symbols.

In some embodiments, the OFDM symbols occupied by the first sidelink reference signal are not used for CSI-RS transmission. That is, on the OFDM symbols occupied by the first sidelink reference signal, CSI-RS transmission is not performed, or it can be said that CSI-RS cannot be transmitted on the OFDM symbols occupied by the first sidelink reference signal. As a result, the OFDM symbols used for transmitting the CSI-RS are different from those occupied by the first sidelink reference signal, which helps to avoid resource conflicts between the CSI-RS and the first sidelink reference signal.

For example, the OFDM symbols occupied by the resources for transmitting the SL PRS within a slot are preconfigured or configured. At this time, UE 1 sends PC5 RRC signaling to UE 2 to indicate that the time-frequency resources for CSI-RS (also referred to as "SL CSI-RS") transmission are PRB1, then the OFDM symbols within PRB1 used for CSI-RS transmission shall not include the OFDM symbols occupied by the resources for SL PRS transmission within the slot.

In some embodiments, the OFDM symbols occupied by the first sidelink reference signal include the first OFDM symbol. If the OFDM symbols occupied by the first CSI-RS include the first OFDM symbol, the first CSI-RS will not be transmitted in the first slot. The first OFDM symbol can be understood as the OFDM symbol where a resource collision (or resource conflict) occurs between the first CSI-RS and the first sidelink reference signal, which is also referred to as the "conflicting OFDM symbol."

In the embodiments of the disclosure, no limitation is imposed on the transmission method of the first CSI-RS. For example, if the first CSI-RS and the first sidelink reference signal have a conflicting OFDM symbol 1 located in slot 1, the first sidelink reference signal occupies OFDM symbol 1 in slot 1 for transmission, while the OFDM symbol occupied by the first CSI-RS can be located in slot 2, where slot 1 and slot 2 are different slots. Alternatively, for example, if the first CSI-RS and the first sidelink reference signal have a conflicting OFDM symbol 1 located in slot 1, the first sidelink reference signal occupies OFDM symbol 1 in slot 1 for transmission, and the first CSI-RS may not be transmitted.

In the embodiments of the disclosure, no limitation is imposed on the first OFDM symbol. For example, the first OFDM symbol can be multiple OFDM symbols among OFDM symbols occupied by the first sidelink reference signal. Alternatively, for example, the first OFDM symbol can be any one of the OFDM symbols occupied by the first sidelink reference signal.

In some embodiments, skipping transmission of the first CSI-RS in the first slot or dropping transmission of the first CSI-RS can be implemented through setting indication information related to the first CSI-RS. In some implementations, the indication information related to the first CSI-RS may be carried in the CSI request field of the 2nd-stage SCI. For example, the value of the CSI request field can be set to 0 to indicate to not transmit or drop the first CSI-RS.

For example, the OFDM symbols occupied by the resources for SL PRS transmission within slot 2 are preconfigured or configured. At this time, UE 1 sends PC5 RRC signaling to UE 2 to indicate that the time-frequency resource for CSI-RS transmission is PRB2. If, within PRB2, the SL PRS and the CSI-RS would be transmitted on the same OFDM symbol, UE 1 can set the value of the CSI request field in the 2nd-stage SCI to 0 to indicate that the CSI-RS will not be transmitted in slot 2.

In some embodiments, the receiving device of the first sidelink reference signal does not expect to receive the CSI-RS on the OFDM symbols occupied by the first sidelink reference signal. Accordingly, in some scenarios, the transmitting device of the first sidelink reference signal can indicate the resources for the first sidelink reference signal to the receiving device based on the needs of the receiving device, which helps to avoid conflicts between the first sidelink reference signal and the CSI-RS.

For example, the OFDM symbol occupied by the first sidelink reference signal is OFDM symbol 1, the transmitting device of the first sidelink reference signal is UE 1, and the receiving device of the first sidelink reference signal is UE 2. UE 2 does not expect to receive the CSI-RS on OFDM symbol 1 occupied by the first sidelink reference signal. Accordingly, UE 1 will not indicate to UE 2 the transmission of the CSI-RS on OFDM symbol 1.

Case 1-2: CSI-RS and the first sidelink reference signal are transmitted on the same OFDM symbol.

In some embodiments, the OFDM symbols occupied by the first sidelink reference signal can be used for CSI-RS transmission. That is, CSI-RS transmission can be performed on the OFDM symbols occupied by the first sidelink reference signal, or it can be said that the CSI-RS can be transmitted on the OFDM symbols occupied by the first sidelink reference signal. This means that within the first time slot, the OFDM symbols occupied by the CSI-RS and the OFDM symbols occupied by the first sidelink reference signal can overlap, which helps to achieve frequency-division multiplexing of the CSI-RS and the first sidelink reference signal on the same OFDM symbol, thereby increasing the flexibility of resource multiplexing for the two reference signals.

For example, the OFDM symbols occupied by the resources for SL PRS transmission within time slot 3 are preconfigured or configured. At this time, UE 1 sends PC5 RRC signaling to UE 2 to indicate that the time-frequency resource for CSI-RS transmission is PRB3, then the OFDM symbols within PRB3 used for CSI-RS transmission may include the OFDM symbols occupied by the resources SL PRS transmission within time slot 3.

In some embodiments, both the first sidelink reference signal and the first CSI-RS occupy the second OFDM symbol, and on the second OFDM symbol, the first sidelink reference signal and the first CSI-RS occupy different REs. That is, within the first time slot, the first sidelink reference signal and the CSI-RS can occupy the same OFDM symbol, but they cannot occupy the same RE on the same OFDM symbol, or in other words, the REs occupied by the first sidelink reference signal and the CSI-RS on the same OFDM symbol cannot overlap in the frequency domain. This helps to increase the flexibility of resource multiplexing while also avoiding resource conflicts between the first sidelink reference signal and the CSI-RS.

For example, the OFDM symbols occupied by the resources for SL PRS transmission within time slot 4 are preconfigured or configured. UE 1 can determine the RE positions of the SL PRS on the occupied OFDM symbols based on preconfigured or configured information. At this time, UE 1 sends PC5 RRC signaling to UE 2 to indicate that the time-frequency resource for CSI-RS transmission is PRB4. The OFDM symbols within PRB4 used for CSI-RS transmission may include the OFDM symbols occupied by the resources for SL PRS transmission within time slot 4, but the REs used for SL PRS transmission and the REs used for CSI-RS transmission on that OFDM symbol are different.

It should be noted that the second OFDM symbol can be any one or a specific one of the OFDM symbols occupied by both the first sidelink reference signal and the first CSI-RS within the first time slot, that is, the OFDM symbols occupied by the first sidelink reference signal and the first CSI-RS include the second OFDM symbol.

In some implementations, the transmitting end device may select the comb size and/or RE offset of the first sidelink reference signal within the first time slot to make the REs of the first sidelink reference signal and REs of the CSI-RS different on the same OFDM symbol within the first time slot, thereby avoiding the overlap of transmission resources for the first sidelink reference signal and the CSI-RS.

Taking the first sidelink reference signal as the SL PRS as an example, the following is an illustrative description in conjunction with FIG. 19. As illustrated in FIG. 19, within the first time slot, the OFDM symbol occupied by both the CSI-RS and the SL PRS is OFDM symbol #8. On OFDM symbol #8, the RE positions occupied by the CSI-RS are RE #4 and RE #5. The comb size of the SL PRS is 4, and with aid of the RE offset of the SL PRS, the overlap between the SL PRS and the CSI-RS can be avoided.

In some embodiments, the transmission power corresponding to the second OFDM symbol is the same as the transmission power corresponding to the third OFDM symbol. The third OFDM symbol carries the reference signal for sidelink positioning, and the third OFDM symbol does not carry the CSI-RS. That is, within the first time slot, the transmission power of the OFDM symbol that carries both the CSI-RS and the reference signal for sidelink positioning is the same as the transmission power of the OFDM symbol that carries the reference signal for sidelink positioning but does not carry the CSI-RS. For example, if the transmitting device transmits both the CSI-RS and the first sidelink reference signal on OFDM symbol 1, and transmits only the first sidelink reference signal on OFDM symbol 2, then the transmission power of the signal on OFDM symbol 1 is the same as the transmission power of the signal on OFDM symbol 2. The following text introduces the calculation method of the transmission power of the CSI-RS and the transmission power of the reference signal for sidelink positioning on the second OFDM symbol in conjunction with Formula 1 and/or Formula 2.

In some embodiments, for an OFDM symbol that has CSI-RS, the transmission power of SL PRS is determined according to Formula 1:

$$P_{\text{SL}-\text{PRS},\text{SL},2}(i) = 10 \, log_{10}\left(\frac{M_{RE}^{\text{SL}-\text{PRS}}(i)}{M_{\text{RE}}^{\text{SL}-\text{PRS},\text{SL}-\text{CSI}-\text{RS}}(i)}\right) + P_{\text{SL}-\text{PRS},\text{SL}}(i)\,[\text{dBm}] \quad .$$

Where $P_{\text{SL-PRS},\text{SL}}(i)$ represents the transmission power of SL PRS in slot $i$ determined according to the SL PRS power control mechanism, assuming that SL PRS and CSI-RS do not overlap in the time domain; $M_{RE}^{\text{SL}-\text{PRS}}(i)$ represents the number of REs occupied by SL PRS in one RB in slot $i$; $M_{RE}^{\text{SL}-\text{CSI}-\text{RS}}(i)$ represents the number of REs occupied by CSI-RS in one RB in slot $i$; $M_{\text{RE}}^{\text{SL}-\text{PRS},\text{SL}-\text{CSI}-\text{RS}}(i)$ represents the number of REs occupied by CSI-RS and SL PRS in one RB in slot i.

It should be noted that, the value of $P_{\text{SL-PRS},\text{SL}}(i)$ can be determined based on SL PRS power control mechanism, and the SL PRS power control mechanism can be defined by communication standard. In embodiments of the disclosure, the value of $P_{\text{SL-PRS},\text{SL}}(i)$ can be preconfigured, or configured by the network device.

In some implementations, for an OFDM symbol that has CSI-RS, the transmission power of CSI-RS is determined according to Formula 2:

$$P_{\text{SL}-\text{CSI}-\text{RS},\text{SL}}(i) = 10 \, log_{10}\left(\frac{M_{RE}^{\text{SL}-\text{CSI}-\text{RS}}(i)}{M_{\text{RE}}^{\text{SL}-\text{PRS},\text{SL}-\text{CSI}-\text{RS}}(i)}\right) + P_{\text{SL}-\text{PRS},\text{SL}}(i)\,[\text{dBm}] \quad .$$ Parameters in Formula 2 may refer to those in Formula 1 and will not be repeated here to avoid redundancy.

As an example, the first sidelink reference signal can be SL PRS, and the first slot can be the structure illustrated in FIG. 19. As illustrated in FIG. 19, OFDM symbol #8 carries both CSI-RS and SL PRS, OFDM symbol #9 carries SL PRS but does not carry CSI-RS, and the transmission power corresponding to OFDM symbol #8 is the same as the transmission power corresponding to OFDM symbol #9. The transmission power of CSI-RS and SL PRS in OFDM symbol #8 can be determined based on the above Formula 1 and Formula 2.

In some implementations, if the CSI-RS is transmitted through multiple antenna ports, the transmission power of the CSI-RS is evenly distributed among the multiple antenna ports, where the transmission power of the CSI-RS can be determined based on the above Formula 2. For example, if the CSI-RS is transmitted through three antenna ports, the transmission power of the CSI-RS determined according to the above Formula is divided into three equal parts, each of which serves as the transmission power of the CSI-RS for each antenna port. Of course, in the embodiments of the disclosure, the transmission power of the CSI-RS is randomly distributed among the multiple antenna ports, and the embodiments of the disclosure do not limit this.

In some implementations, the receiving device of the first sidelink reference signal does not expect the resources occupied by the first sidelink reference signal to overlap with the resources occupied by the CSI-RS. In some embodiments, the resources can include frequency domain resources, for example, they can be REs. Accordingly, in some scenarios, the transmitting device of the first sidelink reference signal can indicate the resources for the first sidelink reference signal to the receiving device based on the requirements of the receiving device, which helps to avoid conflicts between the first sidelink reference signal and the CSI-RS.

For example, the RE1 on OFDM symbol #1 is occupied by the first sidelink reference signal, the transmitting device of the first sidelink reference signal is UE 1, and the receiving device of the first sidelink reference signal is UE 2, and UE 2 does not expect to receive the CSI-RS on RE1 on OFDM symbol #1. Accordingly, UE 1 will not indicate to UE 2 to transmit the CSI-RS on RE1 on OFDM symbol #1.

Case 1-3. The OFDM symbol that has CSI-RS is not used for transmitting first sidelink reference signal.

In some implementations, the OFDM symbols occupied by the first sidelink reference signal are indicated by the transmitting device of the first sidelink reference signal through a first signaling, and the OFDM symbols occupied by the CSI-RS in the first slot are indicated by the transmitting device of the first sidelink reference signal through a second signaling, where the OFDM symbols indicated by the first signaling do not overlap with the OFDM symbols indicated by the second signaling.

That is to say, the OFDM symbols occupied by the CSI-RS and the OFDM symbols occupied by the first sidelink reference signal are both indicated by the transmitting device. Accordingly, the transmitting device can independently control the OFDM symbols occupied by the CSI-RS and the OFDM symbols occupied by the first sidelink reference signal to be nonoverlapping, which helps to avoid resource collision between the CSI-RS and the SL PRS.

In some implementations, the above-mentioned first signaling can be higher-layer signaling, such as SLPP layer signaling or RRC layer signaling. The above-mentioned signaling can contain information related to the OFDM symbols occupied by the first sidelink reference signal within the first slot, for example, parameters related to the OFDM symbols occupied by the first sidelink reference signal within the first slot. For example, a parameter indicating the start point of the OFDM symbols occupied by the first sidelink reference signal within the first slot, and/or a parameter indicating the number of OFDM symbols occupied by the first sidelink reference signal within the first slot.

In some implementations, the above-mentioned second signaling can be PC5 RRC signaling. The above-mentioned second signaling can contain information related to the OFDM symbols occupied by the CSI-RS within the first slot, for example, parameters related to the OFDM symbols occupied by the CSI-RS within the first slot. For example, a parameter indicating the start point of the OFDM symbols occupied by the CSI-RS within the first slot, and/or a parameter indicating the number of OFDM symbols occupied by the CSI-RS within the first slot.

For example, assuming that UE 1 is the transmitting device for both the CSI-RS and the SL PRS, the transmitting device can indicate through signaling 1 that the SL PRS occupies OFDM symbol 1. The transmitting device can indicate through signaling 2 that the CSI-RS occupies OFDM symbol 2. Herein, OFDM symbol 1 and OFDM symbol 2 do not overlap in the time domain.

Embodiment 2: The second sidelink reference signal is PT-RS.

In some implementations, the aforementioned PT-RS can be associated with the antenna port of the PSSCH DMRS. To facilitate understanding, the following describes the transmission methods for the first sidelink reference signal and the second sidelink reference signal in the embodiments of the disclosure in conjunction with Case 2-1 to Case 2-2.

Case 2-1: PT-RS is not transmitted on the OFDM symbols occupied by the first sidelink reference signal.

That is, the OFDM symbols occupied by the first sidelink reference signal cannot be used for PT-RS transmission, or no PT-RS transmission is performed on the OFDM symbols occupied by the first sidelink reference signal. In this way, resource conflicts between the PT-RS and the first sidelink reference signal can be avoided by ensuring that the OFDM symbols occupied by the PT-RS and the OFDM symbols occupied by the first sidelink reference signal are staggered (not overlapped) within one slot.

In some implementations, both the SL PRS and the PT-RS can be transmitted within the allocated PSSCH resource, where the SL PRS may occupy one or more OFDM symbols within the PSSCH resource. The multiple OFDM symbols may be contiguous in the time domain or discretely distributed in the time domain.

For example, UE 1 may transmit the SL PRS on OFDM symbol 1 within the PSSCH resource. Meanwhile, UE 1 may transmit the PT-RS (also referred to as "SL PT-RS") on OFDM symbol 2 within the PSSCH resource, where OFDM symbol 1 and OFDM symbol 2 are different OFDM symbols.

In some implementations, if the OFDM symbol occupied by the first PT-RS overlaps with the OFDM symbol occupied by the first sidelink reference signal, the first PT-RS will not be transmitted in the first slot. That is, if in the first slot, the OFDM symbol occupied by the first PT-RS overlaps with the OFDM symbol occupied by the first sidelink reference signal, the first PT-RS will not be transmitted within the first slot, meaning transmission of the first PT-RS is dropped in the first slot, to avoid the impact of resource conflicts on the transmission process of the first sidelink reference signal.

In embodiments of the disclosure, the transmission method of the first PT-RS is not limited. For example, the first PT-RS may be transmitted in other slots after the first slot. Alternatively, in embodiments of the disclosure, the first PT-RS may no longer be transmitted.

In some implementations, the first sidelink reference signal and the PSSCH DMRS share the same antenna ports, and the first sidelink reference signal is further used for phase tracking. That is, if the OFDM symbol occupied by the first PT-RS overlaps with the OFDM symbol occupied by the first sidelink reference signal, the first PT-RS will not be transmitted in the first slot. In this case, phase tracking can be performed based on the first sidelink reference signal, which helps improve the accuracy of phase tracking and avoids degradation in phase tracking precision due to the absence of transmission of the first PT-RS.

For example, assuming that the SL PRS and the PSSCH DMRS share the same antenna port, when both the SL PRS and the PT-RS are transmitted within the allocated PSSCH resource, the OFDM symbol occupied by the SL PRS and the OFDM symbol occupied by the PT-RS overlap within the allocated PSSCH resource. In this case, UE 1 transmits the SL PRS to UE 2 within the allocated PSSCH resource but will not transmit the PT-RS within the allocated PSSCH resource. The transmitted SL PRS can then be used for phase tracking.

In some implementations, if the OFDM symbol occupied by the first PT-RS overlaps with the OFDM symbol occupied by the first sidelink reference signal, the first PT-RS will be transmitted on a fourth OFDM symbol in the first slot, where the fourth OFDM symbol is an OFDM symbol other than those occupied by the first sidelink reference signal. This helps mitigate the impact on phase tracking at the receiving device of the first sidelink reference signal. For example, if PT-RS 1 and SL PRS1 both occupy OFDM symbol #9 in slot 5, UE 1 may transmit PT-RS1 on OFDM symbol #8 or OFDM symbol #11.

In some implementations, the fourth OFDM symbol is the 1st OFDM symbol after the OFDM symbol occupied by the first sidelink reference signal, or in other words, the fourth OFDM symbol is the next OFDM symbol in the time domain following the OFDM symbol occupied by the first sidelink reference signal. This helps ensure the time-domain transmission density of the PT-RS, thereby avoiding adverse effects on PSSCH reception while preventing resource conflicts between the PT-RS and the first sidelink reference signal.

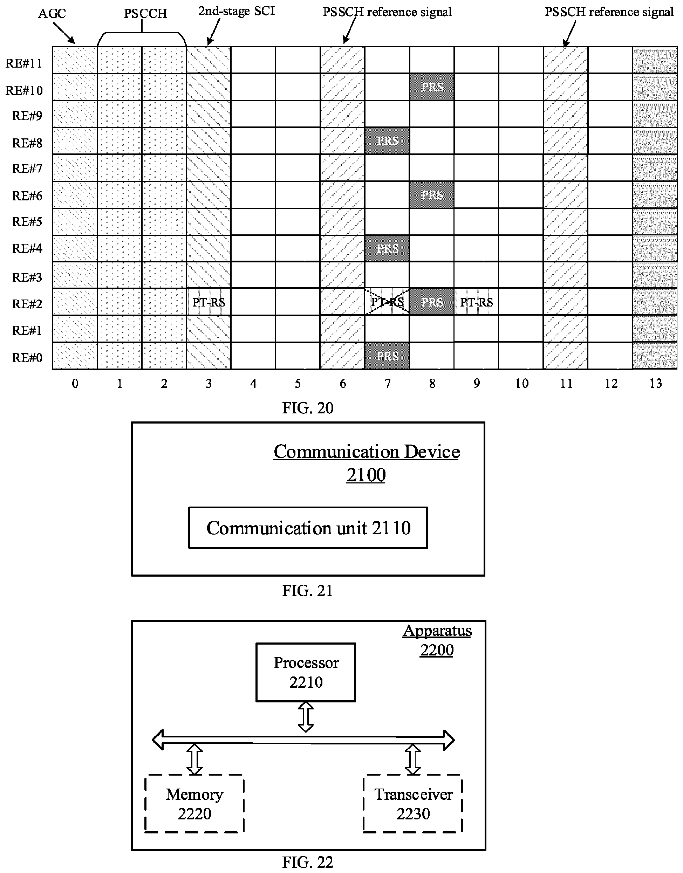

For example, as illustrated in FIG. 20, if both the PT-RS and the SL PRS occupy OFDM symbol #8, UE 1 may transmit the SL PRS on OFDM symbol #8 and transmit the PT-RS on the 1st OFDM symbol after OFDM symbol #8, that is, transmit the PT-RS on OFDM symbol #9.

In some implementations, the time-domain position of the fourth OFDM symbol (or the PT-RS transmission opportunity) may be adjusted based on the index $l_{ref}$ a reference OFDM symbol. For example, the time-domain position of the fourth OFDM symbol may be determined based on adjusting the value of the reference OFDM symbol index $l_{ref}$. For instance, the index $l_{ref}$ of the reference OFDM symbol may be incremented in chronological order (from earliest to latest) to defer the transmission opportunity of the first PT-RS.

In some scenarios, if the adjusted fourth OFDM symbol does not belong to the PSSCH resource, the first PT-RS may not be transmitted on the fourth OFDM symbol. Conversely, if the adjusted fourth OFDM symbol belongs to the PSSCH resource, the first PT-RS may be transmitted on the fourth OFDM symbol. Alternatively, in the embodiments of the disclosure, even if the fourth OFDM symbol does not belong to the PSSCH resource, the first PT-RS may still be transmitted on the fourth OFDM symbol.

In other scenarios, the adjusted fourth OFDM symbol may be used for transmitting PSSCH DMRS. In this case, to avoid collision between the first PT-RS and the PSSCH DMRS, the fourth OFDM symbol may not be used for transmitting the first PT-RS. The embodiments of the disclosure do not limit the transmission method of the first PT-RS. For example, the first PT-RS may be transmitted on other OFDM symbols after the fourth OFDM symbol.

As an example, the first sidelink reference signal is SL PRS, the following describes the solution in the embodiments of the disclosure for adjusting the transmission opportunity of the first PT-RS by modifying the index $l_{ref}$ of the reference OFDM symbol.

If the transmitting device of the SL PRS determines that an OFDM symbol intended for PT-RS transmission belongs to the SL PRS resource used in the current slot, i.e., the OFDM symbol is occupied by SL PRS, the transmitting device will transmit the SL PRS on that OFDM symbol but drop the PT-RS. The transmitting device of the SL PRS may progressively increment the reference OFDM symbol index $l_{ref}$, to defer the PT-RS transmission opportunity of the PT-RS

to the 1st OFDM symbol #n after the SL PRS resource. If this OFDM symbol #n still belongs to the allocated PSSCH resource and the transmitting device of the SL PRS does not transmit PSSCH DMRS on the FDM symbol #n, the transmitting device considers OFDM symbol #n as a PT-RS transmission opportunity and continues to determine subsequent PT-RS transmission opportunities using the incremented $l_{ref}$. The specific deferral method includes steps S2010-S2070.

At S2010, set $i = 0$ and $l_{ref} = 0$.

At S2020, if any OFDM symbol in the range of max $(l_{ref} + (i-1)L_{PT-RS} + 1, l_{ref}), ..., l_{ref} + iL_{PT-RS}$ is the OFDM symbol used by the transmitting device of SL PRS to transmit PSSCH DMRS, set $i = 1$, and set $l_{ref}$ as the index of an OFDM symbol where PSSCH DMRS is located. If OFDM symbol $l_{ref} + iL_{PT-RS}$ belongs to the allocated PSSCH resource, repeat S2020.

At S2030, if OFDM symbol $l_{ref} + iL_{PT-RS}$ is an OFDM symbol used by the transmitting device of SL PRS to transmit SL PRS, then $l_{ref}$ is incremented by 1. If OFDM symbol $l_{ref} + iL_{PT-RS}$ belongs to the allocated PSSCH resource, repeat S2030.

At S2040, if OFDM symbol $l_{ref} + iL_{PT-RS}$ is an OFDM symbol used by the transmitting device of SL PRS to transmit PSSCH DMRS, set $i = 1$ and $l_{ref} = l_{ref} + iL_{PT-RS}$. If OFDM symbol $l_{ref} + iL_{PT-RS}$ belongs to the allocated PSSCH resource, repeat S2020, otherwise, proceed to S2050.

At S2050, add $l_{ref} + iL_{PT-RS}$ to set $l$.

At S2060, $i$ is incremented by 1.

At S2070, if OFDM symbol $l_{ref} + iL_{PT-RS}$ belongs to the allocated PSSCH resource, repeat S2020.

$L_{PT-RS} \in \{1,2,4\}$ represents the transmission interval (in the unit of OFDM symbol) of SL PRS in the time domain, and the value thereof is configured by the network or preconfigured.

In some implementations, after setting the index $l_{ref}$ of the reference OFDM symbol as the index of the fourth OFDM symbol, continue to determine the transmission opportunity of subsequent PT-RS according to the index $l_{ref}$ of the reference OFDM symbol.

As an example, the first sidelink reference signal is the SL PRS, the following elaborates how to defer the transmission opportunity of the first PT-RS by non-sequentially incrementing the index $l_{ref}$ of the reference OFDM symbol.

If the transmitting device of SL PRS determines that an OFDM symbol intended for PT-RS transmission belongs to the SL PRS resource used in the current slot, i.e., the OFDM symbol is occupied by SL PRS, and the 1st OFDM symbol #n following said SL PRS resource still belongs to the allocated PSSCH resource, then the transmitting device of SL PRS sets $l_{ref}$ to #n and continue to determine OFDM symbol #n and subsequent PT-RS transmission opportunities. The specific deferral method includes S3010-S3060.

At S3010, set $i = 0$ and $l_{ref} = 0$.

At S3020, if any OFDM symbol in the range of max $(l_{ref} + (i-1)L_{PT-RS} + 1, l_{ref}), ..., l_{ref} + iL_{PT-RS}$ is the OFDM symbol used by the transmitting device of SL PRS to transmit PSSCH DMRS, set $i = 1$, and set $l_{ref}$ as the index of an OFDM symbol where PSSCH DMRS is located. If OFDM symbol $l_{ref} + iL_{PT-RS}$ belongs to the allocated PSSCH resource, repeat S3020.

At S3030, if OFDM symbol $l_{ref} + iL_{PT-RS}$ belongs to an SL PRS resource used in the current slot by the transmitting device of SL PRS, set $i = 0$ and $l_{ref} = n$. $n$ is the index of the 1st OFDM symbol after the SL PRS resource. If OFDM symbol $n$ belongs to the allocated PSSCH resource, repeat S3020.

At S3040, add $l_{ref} + iL_{PT-RS}$ to set $l$.

At S3050, $i$ is incremented by 1.

At S3060, if OFDM symbol $l_{ref} + iL_{PT-RS}$ belongs to the allocated PSSCH resource, repeat S3020.

$L_{PT-RS} \in \{1,2,4\}$ represents the transmission interval (in the unit of OFDM symbol) of SL PRS in the time domain, and the value thereof is configured by the network or preconfigured.

As an example, the first sidelink reference signal is SL PRS, and $L_{PT-RS}$ of PT RS is $L_{PT-RS} = 4$. As illustrated in FIG.20, start from OFDM symbol #0, according to the transmission interval of PT-RS, the PT-RS can be transmitted on OFDM symbol #4, OFDM symbol #7, and OFDM symbol #11. Since the SL PRS exists on OFDM symbol #7, the PT-RS transmission opportunity is deferred according to the above method to OFDM symbol #9, that is, the 1st OFDM symbol after SL PRS resource.

The preceding description presents the solution in the embodiments of the disclosure where the PT-RS is not transmitted on the OFDM symbol occupied by the first sidelink reference signal. In some scenarios, the PT-RS may alternatively be transmitted on the OFDM symbol occupied by the first sidelink reference signal. That is to say, if the OFDM symbol occupied by the first PT-RS overlaps with the OFDM symbol occupied by the first sidelink reference signal, then the PT-RS associated with the antenna port of the first sidelink reference signal will be transmitted.

Case 2-2: PT-RS (also referred to as "second PT-RS") associated with the antenna port of PSSCH DMRS may be transmitted on an OFDM symbol occupied by the first sidelink reference signal.

In some implementations, if the RE occupied by the second PT-RS overlaps with the target RE occupied by the first sidelink reference signal, the second PT-RS will be transmitted on the target RE. That is, if on the overlapping OFDM symbol occupied by the second PT-RS and the first sidelink reference signal, the RE occupied by the second PT-RS and the RE occupied by the first sidelink reference signal also overlap or coincide, then the PT-RS will be transmitted on the overlapping RE, while the first sidelink reference signal is not transmitted or is dropped on that overlapping RE. In other words, if the RE occupied by the second PT-RS overlaps with the target RE occupied by the first sidelink reference signal, the second PT-RS may puncture the first sidelink reference signal, thereby minimizing the impact on the resource determination method for PT-RS associated with the antenna port of PSSCH DMRS.

For example, when UE 1 transmits both SL PRS and the second PT-RS on the same OFDM symbol, if the SL PRS and the second PT-RS occupy the same RE, UE 1 may transmit only the second PT-RS on that RE and drop the SL PRS, i.e., puncturing the SL PRS.

It should be noted that the resource occupied by the second PT-RS and/or the resource occupied by the first sidelink reference signal may belong to the allocated PSSCH resource. For instance, the first sidelink reference signal may occupy one or more OFDM symbols within the PSSCH resource. Here, the multiple OFDM symbols may be contiguous in the time domain or discretely distributed in the time domain.

The solutions described in Embodiments 1-2 above may be applicable to a shared resource pool. Below, Embodiment 3 introduces the transmission scheme for the first sidelink reference signal in a dedicated resource pool, where the dedicated resource pool is as previously described, and details are omitted for brevity.

Embodiment 3: Transmission scheme for the first sidelink reference signal and the third PT-RS

In some implementations, the dedicated resource pool may also be used to transmit the third PT-RS, i.e., the third PT-RS may also be transmitted in the dedicated resource pool of the first sidelink reference signal.

In the embodiments of the disclosure, the third PT-RS is not specifically limited. In some implementations, the third PT-RS may be a PT-RS associated with the antenna port of the first sidelink reference signal, meaning that the spatial-domain parameter for transmitting the third PT-RS are the same as that for transmitting the first sidelink reference signal.

Additionally, in the embodiments of the disclosure, the resource configuration method for the third PT-RS is not limited. For example, the resource occupied by the third PT-RS (e.g., the positions of occupied REs within a PRB) may be configured or preconfigured.

In some implementations, the position of resources occupied by the third PT-RS is related to the comb size of the first sidelink reference signal. That is, for different comb sizes, the resource position for transmitting the third PT-RS may be configured or preconfigured. In some implementations, the position of resources for transmitting the third PT-RS differ depending on the comb size. For example, the comb size of SL PRS may include 2 and 3, where the position of resources for transmitting the third PT-RS differ between these two comb sizes. In other implementations, the position of resources for transmitting the third PT-RS may be partially the same across different comb sizes. Or, the position of resources for transmitting the third PT-RS may be the same across different comb sizes. The embodiments of the disclosure do not impose limitations on this.

In some implementations, the RE occupied by the third PT-RS coincide with at least one RE occupied by the first sidelink reference signal, i.e., there is at least one overlapping RE between the third PT-RS and the first sidelink reference signal.

In some implementations, the time-domain interval of the third PT-RS is determined based on configuration information from the network device or preconfigured information. The embodiments of the disclosure do not specifically limit the time-domain interval, which may refer to the number of OFDM symbols spaced in the time domain or, alternatively, the duration of the time interval.

In the embodiments of the disclosure, the time-domain interval may be preconfigured, predefined, or configured by the network device. To simplify the configuration method of the time-domain interval, the time-domain interval may default to a first value, e.g., one OFDM symbol.

Furthermore, to ensure that multiple third PT-RSs can be transmitted with corresponding resources in the dedicated resource pool, the PRB interval between multiple third PT-RSs may be determined based on the number of transmission resources in the dedicated resource pool. For example, if the transmission resource is a PRB, the time-domain interval may be determined based on the number of PRBs in the dedicated resource pool.

The method embodiments are described in detail in conjunction with FIG. 1 to FIG. 20 above. The apparatus embodiments will be described in detail below in conjunction with FIG. 21 to FIG. 22. It should be understood that the description of the method embodiments corresponds to that of the apparatus embodiments. Therefore, for those parts not described in detail, reference can be made to the description of the method embodiments above

FIG. 21 is a structural diagram of a terminal device according to the embodiments of the disclosure. The terminal device 2100 illustrated in FIG. 21 can be the first terminal device mentioned above, and the terminal device 2100 can include a communication unit 2110.

The communication unit 2110 is configured to transmit or receive a first sidelink reference signal in a first slot, the first sidelink reference signal is used for sidelink positioning.

In some implementations, an OFDM symbol occupied by the first sidelink reference signal may or may not be used for transmitting a second sidelink reference signal.

In some implementations, the second sidelink reference signal is a CSI-RS, and the OFDM symbol occupied by the first sidelink reference signal is not used for transmitting the CSI-RS.

In some implementations, the OFDM symbol occupied by the first sidelink reference signal includes a first OFDM symbol, and if an OFDM symbol occupied by a first CSI-RS includes the first OFDM symbol, the first CSI-RS will not be transmitted in the first slot.

In some implementations, a receiving device of the first sidelink reference signal does not expect to receive the CSI-RS on the OFDM symbol occupied by the first sidelink reference signal.

In some implementations, the second sidelink reference signal is a CSI-RS, and the OFDM symbol occupied by the first sidelink reference signal may be used for transmitting the CSI-RS.

In some implementations, the first sidelink reference signal and a first CSI-RS both occupy a second OFDM symbol, and the first sidelink reference signal and the first CSI-RS occupy different resource elements (REs).

In some implementations, a transmit power corresponding to the second OFDM symbol is the same as a transmit power corresponding to a third OFDM symbol, the third OFDM symbol carries a reference signal used for sidelink positioning, and the third OFDM symbol does not carry the CSI-RS.

In some implementations, a receiving device of the first sidelink reference signal does not expect a resource occupied by the first sidelink reference signal overlap with a resource occupied by the CSI-RS.

In some implementations, the OFDM symbol occupied by the first sidelink reference signal is determined based on preconfigured information or configuration information from a network device.

In some implementations, the OFDM symbol occupied by the first sidelink reference signal is indicated by a transmitting device of the first sidelink reference signal through first signaling, an OFDM symbol occupied by the CSI-RS in the first slot is indicated by the transmitting device of the first sidelink reference signal through second signaling, and the OFDM symbol indicated by the first signaling do not overlap with the OFDM symbol indicated by the second signaling.

In some implementations, the second sidelink reference signal is a phase-tracking reference signal (PT-RS) associated with an antenna port of a physical sidelink shared channel demodulation reference signal (PSSCH DMRS), and the OFDM symbol occupied by the first sidelink reference signal is not used for transmitting the PT-RS.

In some implementations, if an OFDM symbol occupied by a first PT-RS overlaps with the OFDM symbol occupied by the first sidelink reference signal, the first PT-RS will not be transmitted in the first slot.

In some implementations, the first sidelink reference signal and the PSSCH DMRS share the same antenna port, and the first sidelink reference signal is further used for phase tracking.

In some implementations, if an OFDM symbol occupied by a first PT-RS overlaps with the OFDM symbol occupied by the first sidelink reference signal, the first PT-RS will be transmitted on a fourth OFDM symbol in the first slot, the fourth OFDM symbol is an OFDM symbol other than the OFDM symbol occupied by the first sidelink reference signal.

In some implementations, the fourth OFDM symbol is a 1st OFDM symbol after the OFDM symbol occupied by the first sidelink reference signal.

In some implementations, if an OFDM symbol occupied by a first PT-RS overlaps with the OFDM symbol occupied by the first sidelink reference signal, a PT-RS associated with an antenna port of the first sidelink reference signal will be transmitted.

In some implementations, the second sidelink reference signal is a second PT-RS associated with an antenna port of the PSSCH DMRS, and if an RE occupied by the second PT-RS overlaps with a target RE occupied by the first sidelink reference signal, the second PT-RS will be transmitted on the target RE.

In some implementations, the first sidelink reference signal is transmitted based on resources in a shared resource pool for the first sidelink reference signal and sidelink communication.

In some implementations, the first sidelink reference signal is transmitted based on resources in a dedicated resource pool for the first sidelink reference signal.

In some implementations, the dedicated resource pool is further used for transmitting a third PT-RS.

In some implementations, the third PT-RS is associated with an antenna port of the first sidelink reference signal.

In some implementations, a position of an RE occupied by the third PT-RS within one physical resource block (PRB) is determined based on configuration information from a network device or preconfigured information.

In some implementations, a position of an RE occupied by the third PT-RS is associated with a comb size of the first sidelink reference signal.

In some implementations, a position of an RE occupied by the third PT-RS is the same as that of at least one RE occupied by the first sidelink reference signal.

In some implementations, a time-domain interval of the third PT-RS is determined based on configuration information from a network device or preconfigured information.

In some implementations, a PRB interval of the third PT-RS is determined based on the number of PRBs included in the dedicated resource pool.

FIG. 22 is a schematic structural diagram of a communication apparatus according to the embodiments of the disclosure. The dashed lines in FIG. 22 indicate that the unit or module is optional. The apparatus 2200 can be used to implement the method described in the method embodiments mentioned above. The apparatus 2200 can be a chip, a terminal device, or a network device.

The apparatus 2200 can include one or more processors 2210. The processor 2210 can support the apparatus 2200 in implementing the method described in the method embodiments mentioned above. The processor 2210 can be a general-purpose processor or a dedicated processor. For example, the processor can be a central processing unit (CPU). Alternatively, the processor can also be other general-purpose processors, digital signal processors (DSP), application-specific integrated circuits (ASIC), field programmable gate arrays (FPGA), or other programmable logic devices, discrete gates or transistor logic devices, discrete hardware components, etc. A general-purpose processor can be a microprocessor, or the processor can also be any conventional processor, etc.

The apparatus 2200 can also include one or more memories 2220. The memory 2220 stores a program that can be executed by the processor 2210 to enable the processor 2210 to implement the method described in the method embodiments mentioned above. The memory 2220 can be independent of the processor 2210 or can be integrated into the processor 2210.

The apparatus 2200 can also include a transceiver 2230. The processor 2210 can communicate with other devices or chips through the transceiver 2230. For example, the processor 2210 can transmit and receive data with other devices or chips through the transceiver 2230.

The disclosure also provides a computer-readable storage medium for storing a program. The computer-readable storage medium can be applied to the terminal device in the embodiments of the disclosure, and the program enables the computer to execute the methods executed by the terminal device in the various embodiments of the disclosure.

This disclosure also provides a computer program product. The computer program product includes a program. The computer program product can be applied to the terminal device in the embodiments of the disclosure, and the program enables the computer to execute the methods executed by the terminal device in the various embodiments of the disclosure.

This disclosure also provides a computer program. The computer program can be applied to the terminal device in the embodiments of the disclosure, and the computer program enables the computer to execute the methods executed by the terminal device in the various embodiments of the disclosure.

It should be understood that the terms "system" and "network" can be used interchangeably in the disclosure. In addition, the terms used in the disclosure are only for explaining the specific embodiments of the disclosure and are not intended to limit the disclosure. The terms "comprise" and "have" and any of their variations are intended to cover non-exclusive inclusions.

In the embodiments of the disclosure, the term "indicate" can be a direct indication, an indirect indication, or an indication of a correlation. For example, A indicates B, which can mean that A directly indicates B, such as B can be obtained through A; it can also mean that A indirectly indicates B, such as A indicates C, and B can be obtained through C; or it can mean that there is a correlation between A and B.

In the embodiments of the disclosure, "B corresponding to A" means that B is associated with A, and B can be determined according to A. However, it should also be understood that determining B according to A does not mean that B is determined solely based on A, but B can also be determined based on A and/or other information.

In the embodiments of the disclosure, the term "correspond" can indicate a direct or indirect correspondence between two entities, or a correlation, or a relationship of indication and being indicated, configuration and being configured, etc.

In the embodiments of the disclosure, the term "comprise" or "include" can refer to direct inclusion or indirect inclusion. Optionally, the term "comprise" mentioned in the embodiments of the disclosure can be replaced with "indicate" or "used to determine". For example, A comprises B can be replaced with A indicates B, or A is used to determine B.

In the embodiments of the disclosure, "predefined" or "preconfigured" can be implemented by pre-saving corresponding codes, tables, or other means that can indicate relevant information in a device (e.g., a terminal device and a network device). This disclosure does not limit the specific implementation method. For example, predefined can refer to definitions in a protocol.

In the embodiments of the disclosure, the term "protocol" can refer to standard protocols in the field of communication, such as LTE protocol, NR protocol, and relevant protocols applied in future communication systems. This disclosure does not limit this.

In the embodiments of the disclosure, the term "and/or" is merely a description of the relationship between associated objects, indicating that there can be three relationships, for example, A and/or B can mean: A exists alone, A and B exist simultaneously, or B exists alone. In addition, the character "/" in this application generally indicates that the associated objects before and after it are in an "or" relationship.

In the various embodiments of the disclosure, the sequence numbers of the above processes do not imply the order of execution. The order of execution of the processes should be determined according to their functions and inherent logic, and should not limit the implementation of the embodiments of the disclosure.

In the several embodiments provided in the disclosure, it should be understood that the disclosed systems, apparatuses, and methods can be implemented in other ways. For example, the apparatus embodiments described above are merely illustrative. For example, the division of the units is only a logical function division. In actual implementation, there can be other division methods. For example, multiple units or components can be combined or integrated into another system, or some features can be ignored or not executed. Another point is that the units described as separate components can be physically separated or not. The components displayed as units can be physical units or not, that is, they can be located in one place or distributed over multiple network units. According to the actual needs, some or all of the units can be selected to implement the purpose of the solution of the present embodiment.

In addition, in the various embodiments of the disclosure, each functional unit can be integrated into one processing unit, or each unit can exist separately, or two or more units can be integrated into one unit.

In the above embodiments, the entire or partial implementation can be carried out through software, hardware, firmware, or any combination thereof. When implemented through software, the entire or partial implementation can be realized in the form of a computer program product. The computer program product includes one or more computer instructions. When the computer program instructions are loaded and executed on a computer, the entire or partial processes or functions described in the embodiments of the disclosure are generated. The computer can be a general-purpose computer, a dedicated computer, a computer network, or other programmable devices. The computer instructions can be stored in a computer-readable storage medium or transmitted from one computer-readable storage medium to another. For example, the computer instructions can be transmitted from a website, a computer, a server, or a data center to another website, computer, server, or data center through wired (e.g., coaxial cable, optical fiber, digital subscriber line (DSL)) or wireless (e.g., infrared, wireless, microwave, etc.) means. The computer-readable storage medium can be any available medium that can be read by a computer, or a data storage device such as a server or data center that integrates one or more available media. The available media can be magnetic media (e.g., floppy disk, hard disk, magnetic tape), optical media (e.g., digital video disc (DVD)), or semiconductor media (e.g., solid-state disk (SSD)), etc.

The above description is only a specific implementation of the disclosure, but the protection scope of the disclosure is not limited to this. Any person familiar with this technical field can easily think of changes or substitutions within the technical scope disclosed in the disclosure, and these should be covered within the protection scope of the disclosure. Therefore, the protection scope of the disclosure should be subject to the protection scope of the claims.

**Claims**

1.  A method for sidelink communication, comprising:
    transmitting or receiving, by a first terminal device, a first sidelink reference signal in a first slot, wherein the first sidelink reference signal is used for sidelink positioning.

2.  The method according to claim 1, wherein an orthogonal frequency division multiplexing (OFDM) symbol occupied by the first sidelink reference signal is used or not used for transmitting a second sidelink reference signal.

3.  The method according to claim 2, wherein the second sidelink reference signal is a channel state information reference signal (CSI-RS), and the OFDM symbol occupied by the first sidelink reference signal is not used for transmitting the CSI-RS.

4.  The method according to claim 3, wherein the OFDM symbol occupied by the first sidelink reference signal comprises a first OFDM symbol, and in response to an OFDM symbol occupied by a first CSI-RS comprising the first OFDM symbol, the first CSI-RS will not be transmitted in the first slot.

5.  The method according to claim 3 or 4, wherein a receiving device of the first sidelink reference signal does not expect to receive the CSI-RS on the OFDM symbol occupied by the first sidelink reference signal.

6.  The method according to claim 2, wherein the second sidelink reference signal is a CSI-RS, and the OFDM symbol occupied by the first sidelink reference signal is used for transmitting the CSI-RS.

7.  The method according to claim 6, wherein the first sidelink reference signal and a first CSI-RS both occupy a second OFDM symbol, and the first sidelink reference signal and the first CSI-RS occupy different resource elements (REs).

8.  The method according to claim 7, wherein a transmit power corresponding to the second OFDM symbol is the same as a transmit power corresponding to a third OFDM symbol, wherein the third OFDM symbol carries a reference signal used for sidelink positioning, and the third OFDM symbol does not carry the CSI-RS.

9. The method according to any one of claims 6 to 8, wherein a receiving device of the first sidelink reference signal does not expect a resource occupied by the first sidelink reference signal overlap with a resource occupied by the CSI-RS.

10. The method according to any one of claims 3 to 9, wherein the OFDM symbol occupied by the first sidelink reference signal is determined based on preconfigured information or configuration information from a network device.

11. The method according to any one of claims 3 to 9, wherein the OFDM symbol occupied by the first sidelink reference signal is indicated by a transmitting device of the first sidelink reference signal through first signaling, an OFDM symbol occupied by the CSI-RS in the first slot is indicated by the transmitting device of the first sidelink reference signal through second signaling, and the OFDM symbol indicated by the first signaling do not overlap with the OFDM symbol indicated by the second signaling.

12. The method according to claim 2, wherein the second sidelink reference signal is a phase-tracking reference signal (PT-RS) associated with an antenna port of a physical sidelink shared channel demodulation reference signal (PSSCH DMRS), and the OFDM symbol occupied by the first sidelink reference signal is not used for transmitting the PT-RS.

13. The method according to claim 12, wherein in response to an OFDM symbol occupied by a first PT-RS overlapping with the OFDM symbol occupied by the first sidelink reference signal, the first PT-RS will not be transmitted in the first slot.

14. The method according to claim 13, wherein the first sidelink reference signal and the PSSCH DMRS share the same antenna port, and the first sidelink reference signal is further used for phase tracking.

15. The method according to claim 12, wherein in response to an OFDM symbol occupied by a first PT-RS overlapping with the OFDM symbol occupied by the first sidelink reference signal, the first PT-RS will be transmitted on a fourth OFDM symbol in the first slot, wherein the fourth OFDM symbol is an OFDM symbol other than the OFDM symbol occupied by the first sidelink reference signal.

16. The method according to claim 15, wherein the fourth OFDM symbol is a $1^{st}$ OFDM symbol after the OFDM symbol occupied by the first sidelink reference signal.

17. The method according to claim 12, wherein in response to an OFDM symbol occupied by a first PT-RS overlapping with the OFDM symbol occupied by the first sidelink reference signal, a PT-RS associated with an antenna port of the first sidelink reference signal will be transmitted.

18. The method according to claim 2, wherein the second sidelink reference signal is a second PT-RS associated with an antenna port of the PSSCH DMRS, and in response to an RE occupied by the second PT-RS overlapping with a target RE occupied by the first sidelink reference signal, the second PT-RS will be transmitted on the target RE.

19. The method according to any one of claims 1 to 18, wherein the first sidelink reference signal is transmitted based on resources in a shared resource pool for the first sidelink reference signal and sidelink communication.

20. The method according to claim 1, wherein the first sidelink reference signal is transmitted based on resources in a dedicated resource pool for the first sidelink reference signal.

21. The method according to claim 20, wherein the dedicated resource pool is further used for transmitting a third PT-RS.

22. The method according to claim 21, wherein the third PT-RS is associated with an antenna port of the first sidelink reference signal.

23. The method according to claim 21 or 22, wherein a position of an RE occupied by the third PT-RS within one physical resource block (PRB) is determined based on configuration information from a network device or preconfigured information.

24. The method according to any one of claims 21 to 23, wherein a position of an RE occupied by the third PT-RS is associated with a comb size of the first sidelink reference signal.

25. The method according to any one of claims 21 to 24, wherein a position of an RE occupied by the third PT-RS is the same as that of at least one RE occupied by the first sidelink reference signal.

26. The method according to any one of claims 21 to 25, wherein a time-domain interval of the third PT-RS is determined based on configuration information from a network device or preconfigured information.

27. The method according to any one of claims 21 to 26, wherein a PRB interval of the third PT-RS is determined based on the number of PRBs included in the dedicated resource pool.

28. A terminal device, comprising:
a communication unit, configured to transmit or receive a first sidelink reference signal in a first slot, wherein the first sidelink reference signal is used for sidelink positioning.

29. The terminal device according to claim 28, wherein an orthogonal frequency division multiplexing (OFDM) symbol occupied by the first sidelink reference signal is used or not used for transmitting a second sidelink reference signal.

30. The terminal device according to claim 29, wherein the second sidelink reference signal is a channel state information reference signal (CSI-RS), and the OFDM symbol occupied by the first sidelink reference signal is not used for transmitting the CSI-RS.

31. The terminal device according to claim 30, wherein the OFDM symbol occupied by the first sidelink reference signal comprises a first OFDM symbol, and in response to an OFDM symbol occupied by a first CSI-RS comprising the first OFDM symbol, the first CSI-RS will not be transmitted in the first slot.

32. The terminal device according to claim 30 or 31, wherein a receiving device of the first sidelink reference signal does not expect to receive the CSI-RS on the OFDM symbol occupied by the first sidelink reference signal.

33. The terminal device according to claim 29, wherein the second sidelink reference signal is a CSI-RS, and the OFDM symbol occupied by the first sidelink reference signal is used for transmitting the CSI-RS.

34. The terminal device according to claim 33, wherein the first sidelink reference signal and a first CSI-RS both occupy a second OFDM symbol, and the first sidelink reference signal and the first CSI-RS occupy different resource elements (REs).

35. The terminal device according to claim 34, wherein a transmit power corresponding to the second OFDM symbol is the same as a transmit power corresponding to a third OFDM symbol, wherein the third OFDM symbol carries a reference signal used for sidelink positioning, and the third OFDM symbol does not carry the CSI-RS.

36. The terminal device according to any one of claims 33 to 35, wherein a receiving device of the first sidelink reference signal does not expect a resource occupied by the first sidelink reference signal overlap with a resource occupied by the CSI-RS.

37. The terminal device according to any one of claims 30 to 36, wherein the OFDM symbol occupied by the first sidelink reference signal is determined based on preconfigured information or configuration information from a network device.

38. The terminal device according to any one of claims 30 to 36, wherein the OFDM symbol occupied by the first sidelink reference signal is indicated by a transmitting device of the first sidelink reference signal through first signaling, an OFDM symbol occupied by the CSI-RS in the first slot is indicated by the transmitting device of the first sidelink reference signal through second signaling, and the OFDM symbol indicated by the first signaling do not overlap with the OFDM symbol indicated by the second signaling.

39. The terminal device according to claim 29, wherein the second sidelink reference signal is a phase-tracking reference signal (PT-RS) associated with an antenna port of a physical sidelink shared channel demodulation reference signal (PSSCH DMRS), and the OFDM symbol occupied by the first sidelink reference signal is not used for transmitting the PT-RS.

40. The terminal device according to claim 39, wherein in response to an OFDM symbol occupied by a first PT-RS overlapping with the OFDM symbol occupied by the first sidelink reference signal, the first PT-RS will not be transmitted in the first slot.

41. The terminal device according to claim 40, wherein the first sidelink reference signal and the PSSCH DMRS share the same antenna port, and the first sidelink reference signal is further used for phase tracking.

42. The terminal device according to claim 39, wherein in response to an OFDM symbol occupied by a first PT-RS overlapping with the OFDM symbol occupied by the first sidelink reference signal, the first PT-RS will be transmitted on a fourth OFDM symbol in the first slot, wherein the fourth OFDM symbol is an OFDM symbol other than the OFDM symbol occupied by the first sidelink reference signal.

43. The terminal device according to claim 42, wherein the fourth OFDM symbol is a $1^{st}$ OFDM symbol after the OFDM symbol occupied by the first sidelink reference signal.

44. The terminal device according to claim 39, wherein in response to an OFDM symbol occupied by a first PT-RS overlapping with the OFDM symbol occupied by the first sidelink reference signal, a PT-RS associated with an antenna port of the first sidelink reference signal will be transmitted.

45. The terminal device according to claim 29, wherein the second sidelink reference signal is a second PT-RS associated with an antenna port of the PSSCH DMRS, and in response to an RE occupied by the second PT-RS overlapping with a target RE occupied by the first sidelink reference signal, the second PT-RS will be transmitted on the target RE.

46. The terminal device according to any one of claims 28 to 45, wherein the first sidelink reference signal is transmitted based on resources in a shared resource pool for the first sidelink reference signal and sidelink communication.

47. The terminal device according to claim 28, wherein the first sidelink reference signal is transmitted based on resources in a dedicated resource pool for the first sidelink reference signal.

48. The terminal device according to claim 47, wherein the dedicated resource pool is further used for transmitting a third PT-RS.

49. The terminal device according to claim 48, wherein the third PT-RS is associated with an antenna port of the first sidelink reference signal.

50. The terminal device according to claim 48 or 49, wherein a position of an RE occupied by the third PT-RS within one physical resource block (PRB) is determined based on configuration information from a network device or pre-configured information.

51. The terminal device according to any one of claims 48 to 50, wherein a position of an RE occupied by the third PT-RS is associated with a comb size of the first sidelink reference signal.

52. The terminal device according to any one of claims 48 to 51, wherein a position of an RE occupied by the third PT-RS is the same as that of at least one RE occupied by the first sidelink reference signal.

53. The terminal device according to any one of claims 48 to 52, wherein a time-domain interval of the third PT-RS is determined based on configuration information from a network device or preconfigured information.

54. The terminal device according to any one of claims 48 to 53, wherein a PRB interval of the third PT-RS is determined based on the number of PRBs included in the dedicated resource pool.

55. A terminal device, comprising a transceiver, a memory, and a processor, wherein the memory is configured to store programs, the processor is configured to invoke the programs stored in the memory, and control the transceiver to receive or transmit signals, so as to enable the terminal device to perform the method according to any one of claims 1 to 27.

56. A device, comprising a processor, wherein the processor is configured to invoke programs from a memory to enable the device to perform the method according to any one of claims 1 to 27.

57. A chip, comprising a processor, wherein the processor is configured to invoke programs from a memory to enable a device equipped with the chip to perform the method according to any one of claims 1 to 27.

58. A computer-readable storage medium, storing programs, which enable a computer to perform the method according to any one of claims 1 to 27.

59. A computer program product, comprising a program, which enable a computer to perform the method according to any one of claims 1 to 27.

60. A computer program, enabling a computer to perform the method according to any one of claims 1 to 27.

FIG. 1

FIG. 2

FIG. 3

120b                                  120b

SL
Communication

FIG. 4

Communication Group

Terminal Device 1

Resource Allocation          Resource Allocation

Terminal Device 2                   Terminal Device 3

SL Communication

FIG. 5

Terminal Device 2

Terminal Device 6                             Terminal Device 3

Terminal Device 1

Terminal Device 5                          Terminal Device 4

FIG. 6

Terminal Device 1            Terminal Device 2

SL Data

FIG. 7

FIG. 8

FIG. 9

FIG. 10

FIG. 11

FIG. 12

FIG. 13

Represent resources for DL PRS
transmission

| | |
|---|---|
| RE#11 | |
| RE#10 | ///// |
| RE#9 | |
| RE#8 | ///// |
| RE#7 | |
| RE#6 | ///// |
| RE#5 | |
| RE#4 | ///// |
| RE#3 | |
| RE#2 | ///// |
| RE#1 | |
| RE#0 | ///// |

Comb size=2,
RE offset=0

| | |
|---|---|
| RE#11 | ///// |
| RE#10 | |
| RE#9 | ///// |
| RE#8 | |
| RE#7 | ///// |
| RE#6 | |
| RE#5 | ///// |
| RE#4 | |
| RE#3 | ///// |
| RE#2 | |
| RE#1 | ///// |
| RE#0 | |

Comb size=2,
RE offset=1

FIG. 14

| 0 | 1 | 2 | 3 | 4 | 0 | 1 | 2 | 3 | 4 | 0 | 1 | 2 | 3 | 4 | 0 | 1 | 2 | 3 | 4 |

0  1  2  3  4  5  6  7  8  9  10  11  12  13  14  15  16  17  18  19

→

$f$ (RB)

IRB 0          IRB 1

FIG. 15

30

FIG. 16

60MHz carrier bandwidth

| 20MHz | | 20MHz | | 20MHz |
|---|---|---|---|---|
| RB set #0 | guard band | RB set #1 | guard band | RB set #2 |

FIG. 17

First terminal device

Other terminal devices

S1810, Receive first SL reference signal in a first slot

S1810, Transmit first SL reference signal in a first slot

FIG. 18

AGC  PSCCH  2nd-stage SCI  PSSCH reference signal  PSSCH reference signal

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| RE#11 | | | | | | | | | | | PRS | | | |
| RE#10 | | | | | | | | | PRS | | | | | |
| RE#9 | | | | | | | | | | PRS | | | | |
| RE#8 | | | | | | | | PRS | | | | | | |
| RE#7 | | | | | | | | | | PRS | | | | |
| RE#6 | | | | | | | | | PRS | | | | | |
| RE#5 | | | | | | | | | CSI-RS | PRS | | | | |
| RE#4 | | | | | | | | PRS | CSI-RS | | | | | |
| RE#3 | | | | | | | | | | PRS | | | | |
| RE#2 | | | | | | | | | PRS | | | | | |
| RE#1 | | | | | | | | | | PRS | | | | |
| RE#0 | | | | | | | | PRS | | | | | | |

FIG. 19

FIG. 20

FIG. 21

FIG. 22

## INTERNATIONAL SEARCH REPORT

| | International application No. |
| --- | --- |
| | **PCT/CN2023/110556** |

### A. CLASSIFICATION OF SUBJECT MATTER

H04W 64/00(2009.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 侧行, 边路, 旁路, 参考信号, 时隙, 定位, SL, sidelink, reference signal, RS, PRS, slot, positioning

### C. DOCUMENTS CONSIDERED TO BE RELEVANT

| Category* | Citation of document, with indication, where appropriate, of the relevant passages | Relevant to claim No. |
| --- | --- | --- |
| X | CN 115643636 A (VIVO COMMUNICATION TECHNOLOGY CO., LTD.) 24 January 2023 (2023-01-24)<br>  description, paragraphs 43-336 and 493-497 | 1-60 |
| X | CN 115706627 A (CITIC KEZHILIAN TECHNOLOGY CO., LTD.) 17 February 2023 (2023-02-17)<br>  description, paragraphs 5-265 | 1-60 |
| X | CN 116366216 A (VIVO COMMUNICATION TECHNOLOGY CO., LTD.) 30 June 2023 (2023-06-30)<br>  description, paragraphs 58-246 | 1-60 |
| X | WO 2021097598 A1 (HUAWEI TECHNOLOGIES CO., LTD.) 27 May 2021 (2021-05-27)<br>  description, page 10 line 29-page 13 line 34 | 1-60 |
| A | QUALCOMM INC. "Introduction of OTDOA enhancements for the shared Cell-ID scenario"<br>*3GPP TSG-RAN WG1 Meeting #83, R1-157061*, 20 November 2015 (2015-11-20),<br>  entire document | 1-60 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 April 2024** | **15 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/110556**

| Patent document cited in search report | | | Publication date (day/month/year) | Patent family member(s) | | | Publication date (day/month/year) |
|---|---|---|---|---|---|---|---|
| CN | 115643636 | A | 24 January 2023 | WO | 2023001096 | A1 | 26 January 2023 |
| CN | 115706627 | A | 17 February 2023 | WO | 2023011347 | A1 | 09 February 2023 |
| CN | 116366216 | A | 30 June 2023 | WO | 2023116905 | A1 | 29 June 2023 |
| WO | 2021097598 | A1 | 27 May 2021 | US | 2022279313 | A1 | 01 September 2022 |
| | | | | EP | 4054258 | A1 | 07 September 2022 |
| | | | | AU | 2019475080 | A1 | 16 June 2022 |
| | | | | CN | 114731638 | A | 08 July 2022 |

Form PCT/ISA/210 (patent family annex) (July 2022)